# EUROPÄISCHE PATENTSCHRIFT

(11) **EP 1 611 491 B1**
(45) Veröffentlichungstag und Bekanntmachung des Hinweises auf die Patenterteilung: **29.11.2006**
(21) Anmeldenummer: 04712513.3
(22) Anmeldetag: 19.02.2004
(51) Int. Cl.: G05B 19/418

(54) **VERFAHREN ZUR STEUERUNG DER FERTIGUNGSREIHENFOLGE**
METHOD FOR CONTROLLING A PRODUCTION SEQUENCE
PROCEDE DE COMMANDE D'UNE SEQUENCE DE FABRICATION

(30) Priorität: 09.04.2003 DE 10316103
(43) Veröffentlichungstag der Anmeldung: 04.01.2006
(73) Patentinhaber: DaimlerChrysler AG, 70567 Stuttgart (DE)
(72) Erfinder: DAFERNER, Martin, 71065 Sindelfingen (DE); SUPPER, Reiner, 71063 Sindelfingen (DE)
(86) Internationale Anmeldenummer: PCT/EP2004/001564
(87) Internationale Veröffentlichungsnummer: WO 2004/090651

(56) Entgegenhaltungen:
- EP-B- 0 600 146
- DE-A- 19 927 563

## Beschreibung

Die Erfindung betrifft ein Verfahren zur automatischen Steuerung eines Fertigungsprozesses zur Herstellung kundenindividueller Fertigungsobjekte.

Ein Verfahren nach dem Oberbegriff des Anspruchs 1 ist aus DE 19927563 A1 bekannt. Offenbart wird eine Trennung von Abfolge der Fertigungsobjekte und Abfolge der Aufträge. Einem Fertigungsobjekt, dort Produkt genannt, wird ein Auftrag temporär für einen Teilprozeß, dort Produktionsschritt genannt, zugeordnet. Hierdurch werden ein Fertigungsobjekt und ein Auftrag ausgewählt. Ein Arbeitsauftrag an den Teilprozeß zur Bearbeitung des ausgewählten Fertigungsobjekts für den ausgewählten Auftrag wird erzeugt und beim Durchlauf des Fertigungsobjekts durch den Teilprozeß abgearbeitet. Nachdem das Fertigungsobjekt den Teilprozeß durchlaufen hat, wird ihm derselbe oder aber ein anderer Auftrag zugeordnet.

Das Verfahren nach DE 19927563 A1 vermag nicht sicherzustellen, daß die Bearbeitung eines Auftrags in einem Teilprozeß spätestens nach einer maximalen Wartezeit begonnen wird. Möglich ist nämlich, daß ein bestimmter Auftrag beliebig lange keinem Fertigungsobjekt zugeordnet wird und daher unbegrenzt lange zurückgestellt wird. In diesem Falle beginnt die Bearbeitung erst beliebig spät oder gar niemals.

Aus DE 19815619 A1 ist ein Verfahren zur Steuerung eines Fertigungsprozesses, dort eines Fahrzeugmontageprozesses, bekannt. Der Fertigungsprozeß umfaßt eine Karosserielinie, eine Lackierungslinie und eine Ausstattungslinie, in der verschiedene Ausstattungsteile an den Fertigungsobjekten - hier: den lackierten Karosserien - montiert werden. Ein Reihenfolgeplan für die Ausstattungslinien wird erzeugt, basierend auf diesem ein Reihenfolgeplan für die Lackierungslinien, und auf dessen Reihenfolgeplan basierend wird ein Reihenfolgeplan für die Karosserielinie erzeugt. Vorgegeben sind hierfür Spezifikationen für Fahrzeuge. Das in DE 19815619 A1 offenbarte Verfahren vermag nicht, lange Wartezeiten für einzelne Aufträge mit bestimmten Spezifikationen zu vermeiden.

Der Erfindung liegt die Aufgabe zugrunde, ein Verfahren nach dem Oberbegriff des Anspruchs 1 zu schaffen, durch das in der Serienfertigung garantiert wird, daß die Bearbeitung eines Auftrags im Teilprozeß spätestens nach einer maximalen Wartezeit begonnen wird.

Die Aufgabe wird durch ein Verfahren nach Anspruch 1 und eine Vorrichtung nach Anspruch 22 gelöst. Vorteilhafte Ausgestaltungen werden durch die Unteransprüche festgelegt.

Eine Abfolge von Fertigungsobjekten und eine Abfolge von in elektronischer Form vorliegenden Aufträgen für Produkte, die im Fertigungsprozeß aus den Fertigungsobjekten gefertigt werden, durchlaufen den Fertigungsprozeß. Dieser Fertigungsprozeß umfaßt einen Teilprozeß. Dieser Teilprozeß ist entweder ein Teil des gesamten Fertigungsprozesses oder gleich dem gesamten Fertigungsprozeß. Das Verfahren steuert die Reihenfolge, in der die Fertigungsobjekte in diesen Teilprozeß zum Zwecke ihrer Bearbeitung eingeführt werden.

Erfindungsgemäß wird eine Kopie der Auftrags-Abfolge gebildet. Ein zunächst leerer elektronischer Zwischenspeicher für Aufträge wird erzeugt. In diesen Zwischenspeicher werden die Aufträge eingestellt, die nicht sofort durch Bearbeitung eines Fertigungsobjekts ausgeführt werden können.

Wiederholt wird ein Auswahlvorgang durchgeführt, bei dem jeweils ein Auftrag der Kopie der Auftrags-Abfolge und ein Fertigungsobjekt der Fertigungsobjekt-Abfolge, die zueinander passen, ausgewählt werden. Bei diesem Vergleich werden vorzugsweise Merkmale eines Auftrags mit solchen Merkmalen eines Fertigungsobjekts miteinander verglichen, die im nachfolgenden Teilprozeß erzeugt oder verändert werden, und nicht mit denen, die im Teilprozeß unverändert bleiben. Bei einem Auswahlvorgang wird dann, wenn das erste Fertigungsobjekt der Fertigungsobjekt-Abfolge und der erste Auftrag der Kopie nicht zueinander passen, der erste Auftrag aus der Kopie entfernt und in den Zwischenspeicher eingestellt. Weiterhin werden bei einem Auswahlvorgang dann, wenn die bisherige Verweildauer mindestens eines Auftrags im Zwischenspeicher größer oder gleich einer vorgegebenen Verweildauer-Schranke ist, folgende Schritte durchgeführt:
- Der Auftrag mit der größten Verweildauer im Zwischenspeicher und ein zu ihm passendes Fertigungsobjekt aus der Fertigungsobjekt-Abfolge werden ausgewählt.
- Der ausgewählte Auftrag wird aus dem Zwischenspeicher entfernt.
- Das ausgewählte Fertigungsobjekt wird auf den ersten Platz der Fertigungsobjekt-Abfolge vorgezogen.

Eine Fertigungsstätte, in welcher der Fertigungsprozeß realisiert wird, umfaßt vorzugsweise Mittel, um ein Fertigungsobjekt auf den ersten Platz der Fertigungsobjekt-Abfolge vorzuziehen. Diese Mittel umfassen beispielsweise einen Sortierpuffer mit wahlfreiem Zugriff auf die in ihm eingestellten Fertigungsobjekte oder eine Einrichtung zum Ausschleusen eines Fertigungsobjekts aus der Fertigungsobjekt-Abfolge und Einschleusen dieses Fertigungsobjekts auf den ersten Platz. Eine alternative Ausführungsform besteht daraus, Fertigungsobjekte auf Vorrat zu produzieren und zwischenzulagern, um dann, wenn ein Vorziehen anders nicht möglich ist, ein Fertigungsobjekt zur Verfügung zu haben, welches zum Auftrag mit der größten Verweildauer paßt.

Das Verfahren setzt voraus, daß eine Verweildauer-Schranke VS vorgegeben ist. Diese Verweildauer-Schranke VS wird mit den Aufenthaltsdauern von Aufträgen im elektronischen Zwischenspeicher verglichen.

Im folgenden wird erläutert, wieso das Verfahren eine obere Schranke für die Wartezeit garantiert, wieso also sichergestellt ist, daß die Wartezeit keinesfalls eine bestimmte obere Schranke übersteigt.

In der Serienfertigung sind ein minimaler Zeitabstand T_min und ein maximaler Zeitabstand T_max zwischen zwei Auswahlvorgängen vorgegeben. Im Falle einer Taktfertigung stimmen typischerweise diese beiden Zeitabstände überein und sind gleich der Taktzeit. Das Verfahren läßt sich aber auch für eine Serienfertigung ohne eine vorgegebene Taktfertigung anwenden.

Sei M die kleinste natürliche Zahl, die größer oder gleich dem Quotienten aus der Verweildauer-Schranke VS und dem minimalen Zeitabstand T_min ist. Seien t₁, t₂, ... die Zeitpunkte der Auswahlvorgänge.

Zu jedem Zeitpunkt der Bearbeitung der Aufträge befinden sich maximal M Aufträge im elektronischen Zwischenspeicher. Denn zu Beginn der Bearbeitung ist der elektronische Zwischenspeicher leer, und bei jedem Auswahlvorgang wird höchstens ein Auftrag in den Zwischenspeicher eingestellt. Falls sich nach einem Auswahlvorgang zum Zeitpunkt tₙ genau M Aufträge im Zwischenspeicher befinden, so befindet sich der Auftrag mit der größten Verweildauer daher schon mindestens M Auswahlvorgänge lang im Zwischenspeicher. Sei KA_max dieser Auftrag. Die Verweildauer von KA_max ist größer oder gleich der Verweildauer-Schranke VS, weil M größer oder gleich dem Quotienten aus VS und T_min ist und zwischen zwei Auswahlvorgängen mindestens eine Zeitspanne von T_min liegt. Erfindungsgemäß wird daher im folgenden Auswahlvorgang zum Zeitpunkt tₙ₊₁ der Auftrag KA_max ausgewählt und aus dem Zwischenspeicher entfernt. Nach diesem folgenden Auswahlvorgang befinden sich dann nur noch M-1 Aufträge im Zwischenspeicher. Falls sich nach dem übernächsten Auswahlvorgang, also nach dem zum Zeitpunkt tₙ₊₁, wieder M Aufträge im Zwischenspeicher befinden, wiederholt sich das obige Procedere.

Jeder Auftrag verweilt maximal M+1 Auswahlvorgänge lang im elektronischen Zwischenspeicher. Denn zu jedem Zeitpunkt befinden sich maximal M Aufträge im Zwischenspeicher. Ein Auftrag, der M Auswahlvorgänge lang im Zwischenspeicher verbleibt, ohne ausgewählt zu werden, ist nach diesen M Auswahlvorgängen daher derjenige Auftrag mit der größten Verweildauer im Zwischenspeicher. Erfindungsgemäß wird dieser Auftrag daher im nächsten, also im Auswahlvorgang zum Zeitpunkt tₙ₊₁ ausgewählt.

Die Verweildauer jedes Auftrags ist also auf M+1 Auswahlvorgänge beschränkt. Weil zwischen zwei Auswahlvorgängen höchstens eine Zeit von T_max verstreicht, ist die Verweildauer jedes Auftrags kleiner oder gleich (M+1)*T_max. Die garantierte maximale Wartezeit beläuft sich also auf (M+1)*T_max. Im Falle einer Taktfertigung mit zeitlich konstantem Takt T ist T_max = T_min = T, und die maximale Wartezeit beträgt VS + T.

Die Fertigung der Produkte wird in der durch die Original-Auftrags-Abfolge gegebenen Reihenfolge am Anfang des Fertigungsprozesses begonnen. In der Regel erreichen die Fertigungsobjekte aber nicht in dieser Reihenfolge den Teilprozeß. Vor allem durch Nacharbeit an einzelnen Fertigungsobjekten, die z. B. aufgrund von Qualitätsmängeln erforderlich werden kann, aufgrund fehlender oder mangelhafter auftragspezifischer Zulieferteile oder durch Parallelverarbeitung in einem vorhergehenden Teilprozeß kann nämlich die Reihenfolge der Fertigungsobjekte in der Fertigungsobjekt-Abfolge von der Reihenfolge der Aufträge in der Original-Auftrags-Abfolge abweichen. Die Anzahl von Positionen, die ein Fertigungsobjekt nach vorne vorrückt, heißt Vorgriff. Die Anzahl Positionen, die es nach hinten zurückfällt, wird als Nachgriff bezeichnet. Durch das erfindungsgemäße Verfahren werden der Vorgriff und der Nachgriff eines Fertigungsobjekts in der Fertigungsobjekt-Abfolge beschränkt.

Die Bearbeitung jedes Fertigungsobjekts wird vorzugsweise aufgrund eines Auftrags begonnen. Daher paßt jedes Fertigungsobjekt zu mindestens einem Auftrag der Original-Auftrags-Abfolge. Wie oben dargelegt, verbleibt die Kopie des Auftrags höchstens M+1 Auswahlvorgänge lang im Zwischenspeicher. Anschließend werden der Auftrag und ein passendes Fertigungsobjekt ausgewählt. Dieses ausgewählte Fertigungsobjekt erhält daher beim Eintritt in den Teilprozeß einen Nachgriff von höchstens M+1 - zusätzlich zu einem möglicherweise bereits vorhandenen Nachgriff aus vorhergehenden Teilprozessen des Fertigungsprozesses.

Andererseits befinden sich zu jedem Zeitpunkt maximal M Aufträge im Zwischenspeicher. Daher kann ein Fertigungsobjekt beim Eintritt in den Teilprozeß höchstens M-mal je eine Position in der Fertigungsobjekt-Abfolge nach vorne rücken, bevor es ausgewählt wird. Ein wahlfreier Sortierer für Fertigungsobjekte am Eingang des Teilprozesses braucht daher lediglich M Plätze zu besitzen. Damit erlaubt es das erfindungsgemäße Verfahren, die maximal erforderliche Größe für physikalische Zwischenspeicher, in denen Fertigungsobjekte vor ihrer Bearbeitung im Teilprozeß zwischengelagert werden, zu bestimmen.

Das erfindungsgemäße Verfahren stellt darüber hinaus unter folgender Voraussetzung sicher, daß für einen Auftrag ein passendes Fertigungsobjekt spätestens nach einer maximalen Durchlaufzeit den Teilprozeß durchlaufen hat: Eine für alle Fertigungsobjekte der Fertigungsobjekt-Abfolge gültige maximale Bearbeitungszeit durch den Teilprozeß ist vorgegeben. Die Bearbeitungszeit eines Fertigungsobjekts ist der Zeitabstand zwischen Auswahl des Fertigungsobjekts und Austritt des Fertigungsobjekts aus dem Teilprozeß. In der Bearbeitungszeit sind Wartezeiten im Teilprozeß nach Auswahl des Fertigungsobjekts enthalten, aber nicht z. B. die Wartezeit zwischen Verlassen eines vorhergehenden Teilprozesses und Auswahl des Fertigungsobjekts.

Die maximale Bearbeitungszeit im Teilprozeß läßt sich mit technischen und organisatorischen Mitteln sicherstellen, im Falle der Produktion von Kraftfahrzeugen z. B. durch ausreichende Dimensionierung von Bearbeitungsstationen und Zwischenspeichern sowie eine ausreichende Anzahl von Nacharbeitsplätzen.

Wie oben dargelegt, verstreicht bis zur Bearbeitung eines Fertigungsobjekts höchstens eine Wartezeit, die kleiner oder gleich der Summe aus der Verweildauer-Schranke und dem maximalen Zeitabstand zwischen zwei aufeinanderfolgenden Auswahlvorgängen ist. Spätestens dann wird das Fertigungsobjekt ausgewählt. An die Auswahl schließt sich die Bearbeitung im Teilprozeß an. Die hierfür benötigte Zeitspanne ist kleiner oder gleich der vorgegebenen maximalen Bearbeitungszeit.

Die bei der gerade beschriebenen Ausführungsform garantierte maximale Durchlaufzeit durch den Teilprozeß ist demnach die Summe aus
- der vorgegebenen Verweildauer-Schranke,
- dem maximalen Zeitabstand zwischen zwei aufeinanderfolgenden Auswahlvorgängen
- und der maximalen Bearbeitungszeit im Teilprozeß.

In einer Fortbildung des Verfahrens wird zusätzlich die Möglichkeit berücksichtigt, daß ein Ausfall des Teilprozesses auftritt, der den Durchlauf der Fertigungsobjekte vorübergehend völlig zum Erliegen bringt oder erheblich verzögert. Um die Einhaltung der Zeitspanne auch für einen solchen Ausfall zu garantieren, wird eine maximale Fehlerbehandlungszeit nach einem solchen Ausfall garantiert. Nach Ablauf dieser maximalen Fehlerbehandlungszeit werden Fertigungsobjekte wieder so im Teilprozeß bearbeitet, daß die oben beschriebene maximale Durchlaufzeit eingehalten wird. Die maximale Fehlerbehandlungszeit wird zur maximalen Durchlaufzeit addiert, und die Summe ist die garantierte Gesamt-Durchlaufzeit.

Bei der Ausgestaltung nach Anspruch 2 ist eine Anzahl-Schranke vorgegeben. Damit ist vorgegeben, wie viele Aufträge sich höchstens gleichzeitig im elektronischen Zwischenspeicher befinden dürfen. Die Ausgestaltung stellt sicher, daß diese vorgegebene Anzahl-Schranke eingehalten wird.

Beispielsweise Kraftfahrzeuge werden in einem Fertigungsprozeß mit mehreren aufeinanderfolgenden Teilprozessen gefertigt, darunter die Teilprozesse Rohbau, Lackierung und Inneneinbau. Jedes Kraftfahrzeug wird für einen bestimmten Auftrag individuell gefertigt. Dem Kunden wird ein Ablieferungstermin zugesagt, aus dem ein Schlußabnahmetermin für das aufgrund seines Auftrags gefertigten Kraftfahrzeuges abgeleitet wird. Für jeden Teilprozeß ist eine Soll-Bearbeitungszeit bekannt. Ein Fertigungsobjekt durchläuft dann einen Teilprozeß in der Soll-Bearbeitungszeit, wenn es ohne Zurückstellung ausgewählt und ohne Verzögerung im Teilprozeß bearbeitet wird. Die Summe aller Soll-Bearbeitungszeiten liefert die Soll-Bearbeitungszeit im gesamten Fertigungsprozeß. Weiterhin wird eine maximale Verspätung des tatsächlichen Schlußabnahmetermins gegenüber dem abgeleiteten Schlußabnahmetermin festgelegt. Diese maximale Verspätung wird auf maximal zulässige Verzögerungen in den Teilprozessen aufgeteilt. Eine maximale Durchlaufzeit für einen Teilprozeß des Fertigungsprozesses ergibt sich als Summe der maximal zulässigen Verzögerung und der Soll-Bearbeitungszeit des Teilprozesses.

Wird das erfindungsgemäße Verfahren für jeden Teilprozeß des Fertigungsprozesses angewendet und sind maximale Bearbeitungszeiten vorgegeben, so hält jeder Teilprozeß seine maximale Durchlaufzeit ein, und die maximale Verspätung ist die Summe aus allen garantierten Zeitspannen.

Bei der kundenindividuellen Fertigung von Kraftfahrzeugen müssen oft auch einige individuelle Teilsysteme gefertigt werden. Hierfür wird jedem Lieferanten eine Lieferauftrags-Abfolge vorgegeben, die aus der Auftrags-Abfolge abgeleitet wird. Durch das erfindungsgemäße Verfahren wird ein weiterer Vorteil beim Herleiten der Lieferauftrags-Abfolge erzielt. Dieser Vorteil wird für den Fall erläutert, daß der Fertigungsprozeß zwei Teilprozesse umfaßt, die nacheinander durchlaufen werden. Aus der Auftrags-Abfolge wird eine Lieferauftrags-Abfolge für einen Lieferanten erzeugt, dessen Teilsysteme während des zweiten Teilprozesses in die Fertigungsobjekte eingebaut werden.

Mit Hilfe des erfindungsgemäßen Verfahrens wird eine maximale Durchlaufzeit für den zeitlich ersten Teilprozeß garantiert. Die Lieferauftrags-Abfolge wird aus der Original-Auftrags-Abfolge abgeleitet. Auch dann, wenn Aufträge beim Durchlauf durch den ersten Teilprozeß zurückgestellt werden müssen, wird die Original-Auftrags-Abfolge nicht verändert und dennoch die garantierte maximale Durchlaufzeit eingehalten. Ein Teilsystem, das gemäß der Lieferauftrags-Abfolge gefertigt und angeliefert wird, wird spätestens nach Ablauf der maximalen Durchlaufzeit durch den ersten Teilprozeß in ein passendes Fertigungsobjekt eingebaut und braucht auf keinen Fall länger zwischengelagert zu werden. Je länger diese Zwischenlagerung dauert, desto teurer wird sie, z. B. aufgrund von erforderlichem Stell- oder Lagerplatz oder Störungen im geplanten Ablauf.

Durch das Verfahren wird darüber hinaus eine längere Vorlaufzeit für den Lieferanten erzielt. Bereits dann, wenn die Original-Auftrags-Abfolge feststeht, läßt sich die Lieferauftrags-Abfolge erzeugen und an den Lieferanten ermitteln - auch dann, wenn die Original-Auftrags-Abfolge noch nicht den ersten Teilprozeß erreicht hat. Die Lieferauftrags-Abfolge wird nicht durch Verzögerungen oder Störungen im ersten Teilprozeß verändert. Der Lieferant erhält so eine längere Vorlaufzeit und damit mehr Zeit, um seine Produktion auf die Lieferauftrags-Abfolge einzustellen oder um seine eigenen Vorlieferanten zu beauftragen.

Aus der vorgegebenen Verweildauer-Schranke des erfindungsgemäßen Verfahrens läßt sich eine maximale Durchlaufzeit für den Teilprozeß ableiten. Oft ist umgekehrt eine maximale Durchlaufzeit, die vom Teilprozeß gefordert wird, vorgegeben. Beispielsweise soll einem Kunden ein Auslieferungstermin zugesagt werden. Aus dem Zeitabstand zwischen Auftragserteilung und Auslieferungstermin wird eine maximale Gesamt-Durchlaufzeit durch den gesamten Fertigungsprozeß abgeleitet und diese auf maximale Durchlaufzeiten durch die einzelnen Teilprozesse aufgeteilt. Außerdem ist der maximale Zeitabstand zwischen zwei aufeinanderfolgenden Auswahlvorgängen vorgegeben, beispielsweise als Taktzeit einer Serienfertigung. Die Verweildauer-Schranke des Verfahrens wird bei dieser Ausführungsform so bestimmt, daß die aus der Festlegung wie oben beschrieben resultierende geforderte maximale Durchlaufzeit eingehalten wird (Anspruch 3).

Die Ausgestaltung nach Anspruch 4 legt ein alternatives Verfahren fest, um unter den in den Zwischenspeicher eingestellten Aufträgen einen auszuwählen. Hierzu wird automatisch erprobt, wie lange die Bearbeitung jedes Auftrags im Teilprozeß dauert, vorausgesetzt dieser Auftrag und ein passendes Fertigungsobjekt werden ausgewählt. Für jeden Auftrag im Zwischenspeicher wird dabei probeweise ein passendes Fertigungsobjekt ermittelt. Probeweise wird ein Arbeitsauftrag an den Teilprozeß zur Bearbeitung des passenden Fertigungsobjekts für den Auftrag erzeugt. Ermittelt wird, wie lange die Durchführung dieses Arbeitsauftrages bezogen auf das passende Fertigungsobjekt dauern wird. Für diese Ermittlung wird beispielsweise eine Simulation durchgeführt, oder Betriebsprotokolle mit Ausführungszeiten von Arbeiten, die im Teilprozeß ausgeführt werden, werden ausgewertet. Derjenige Auftrag im Zwischenspeicher wird ausgewählt, für den die Summe aus Verweildauer im Zwischenspeicher und probeweise ermittelter Durchführungsdauer den größten Wert annimmt. Damit ist sichergestellt, daß die Durchlaufzeit durch den Teilprozeß im Durchschnitt über die zurückgestellten Aufträge möglichst gering wird.

Die Ausgestaltung nach Anspruch 5 berücksichtigt die Möglichkeit, daß ein Auftrag so lange im elektronischen Zwischenspeicher verbleibt, bis die Verweildauer-Schranke erreicht ist. In diesem Fall wird dieser Auftrag aus dem Zwischenspeicher entfernt und markiert. Beispielsweise wird er als nicht innerhalb einer vorgegebenen Zeitspanne baubar gekennzeichnet oder an den Anfang des Fertigungsprozesses oder des Teilprozesses übermittelt.

Die Erfindung sieht vor, daß ein Auftrag im Zwischenspeicher und ein passendes Fertigungsobjekt dann ausgewählt werden, wenn die Verweildauer eines Auftrags im Zwischenspeicher größer oder gleich der Verweildauer-Schranke ist. Anspruch 6 sieht vor, daß unter bestimmten Umständen auch dann, wenn keine Verweildauer eines Auftrags diese Schranke erreicht hat, ein Auftrag im Zwischenspeicher ausgewählt wird, nämlich dann, wenn das erste Fertigungsobjekt der Fertigungsobjekt-Abfolge zu einem Auftrag im Zwischenspeicher paßt.

In der Ausgestaltung nach Anspruch 7 wird die manchmal auftretende Anforderung berücksichtigt, daß Fertigungsobjekte im Teilprozeß in Losen bearbeitet werden. Beispielsweise beträgt die Losgröße N = 4, und in einer Lackierstraße als dem Teilprozeß werden vier Fertigungsobjekte nacheinander als ein Los in derselben Farbe lackiert. Auf diese Weise läßt sich die Lackierstraße wesentlich wirtschaftlicher betreiben, als wenn nach jeder Lackierung eines Fertigungsobjekts die Lackierstraße gereinigt und für die Lackierung in einer anderen Farbe vorbereitet werden müßte. Die Lackierung der Fertigungsobjekte hängt in diesem Beispiel nicht von solchen Merkmalen der Fertigungsobjekte ab, die in vorangehenden Teilprozessen hergestellt werden.

In einer Fortbildung dieser Ausgestaltung (Anspruch 8) wird eine bezüglich einer Bewertungsfunktion optimale Menge von N Aufträgen und N Fertigungsobjekten ausgewählt. Hierfür werden verschiedene mögliche Auswahlen, also verschiedene Mengen, verglichen, indem sie probeweise ausgewählt werden, die Bewertungsfunktion auf jede dieser Mengen angewendet und die am besten bewertete Menge tatsächlich ausgewählt wird. Mindestens eine der folgenden Einzel-Kriterien fließt in die Bewertungsfunktion ein:
- Wie viele weitere Fertigungsobjekte der Fertigungsobjekt-Abfolge befinden sich vor einem Fertigungsobjekt der probeweise ausgewählten Menge und gehören selber nicht zur Menge? Damit im Falle einer tatsächlichen Auswahl die ausgewählten N Fertigungsobjekte auf die ersten N Plätze vorgezogen werden, müssen diese weiteren Fertigungsobjekte z. B. in einem Sortierpuffer zwischengelagert werden, oder ausgewählte Fertigungsobjekte müssen an den weiteren vorbeigeführt werden. Je weniger weitere Fertigungsobjekte ermittelt werden, desto höher wird die jeweilige Menge bewertet. Hinsichtlich dieses Einzelkriteriums sind die ersten N Fertigungsobjekte der Fertigungsobjekt-Abfolge optimal - jedoch ist es möglich, daß N hierzu passende Aufträge eine geringe Einzel-Bewertung erhalten.
- Wie viele weitere Aufträge der Kopie der Auftrags-Abfolge befinden sich vor einem Auftrag der probeweise ausgewählten Menge und gehören selber nicht zur Menge? Damit im Falle einer tatsächlichen Auswahl die ausgewählten Aufträge ausgeführt werden können, müssen diese weiteren Aufträge in den elektronischen Zwischenspeicher aufgenommen werden.
- Wie lange, d. h. wie viele Takte, verweilten die Aufträge der Menge bereits im elektronischen Zwischenspeicher? Aufträge der Menge, die sich aktuell nicht im Zwischenspeicher befinden, sondern in der Auftrags-Abfolge, erhalten vorzugsweise in dieser Bewertung eine Verweildauer von 0 Takten.
- Welche Kosten und welchen Zeitaufwand verursacht die Bearbeitung der N Fertigungsobjekte im Teilprozeß gemäß der N Aufträge? Hierbei werden insbesondere Umspann- oder Umrüstzeiten berücksichtigt, z. B. Umrüstzeiten an einer Lackierstraße, um Fertigungsobjekte in einer anderen Farbe lackieren zu können.

Vorzugsweise wird insbesondere im Falle der Taktfertigung die zusätzlich Positions-Bandbreite des Teilprozesses ermittelt (Anspruch 10). Die Positions-Bandbreite setzt sich aus dem maximalen Vorgriff und dem maximalen Nachgriff zusammen. Der Vorgriff eines Fertigungsobjekts ist die Anzahl von Takten, die das Fertigungsobjekt früher als geplant den Teilprozeß verläßt. Entsprechend ist der Nachgriff eines Fertigungsobjekts die Anzahl von Takten, die das Fertigungsobjekt später als geplant den Teilprozeß verläßt. Vorgriffe und Nachgriffe lassen sich durch Vergleich der Auftrag-Abfolge mit der erzeugten Kopie der Auftrag-Abfolge in einfacher Weise ermitteln. Falls ein Auftrag in der Kopie dem entsprechenden Auftrag in der Original-Abfolge um N Takte vorauseilt, so eilt auch das für diesen Auftrag in der Kopie ausgewählte Fertigungsobjekt dem Auftrag in der Original-Abfolge um N Takte voraus.

Weiterhin wird vorzugsweise die Positions-Güte im Teilprozeß ermittelt (Anspruch 11). Die Positions-Güte wird vorzugsweise als Anteil derjenigen Aufträge, die vor Zuführung zum Teilprozeß nicht zurückgestellt wurden, an allen Aufträgen in der Auftrags-Abfolge berechnet. Um die Positions-Güte zu bestimmen, wird ermittelt, welche Aufträge der Kopie in den elektronischen Zwischenspeicher gelangen und welche nicht. Falls die Positions-Güte beispielsweise geringer als eine vorgegebene untere Schranke wird, so werden Maßnahmen ergriffen, um die Positions-Güte zu steigern. Beispielsweise werden zusätzliche Plätze in einem Sortierpuffer für Fertigungsobjekte bereitgestellt, damit mehr Fertigungsobjekte zwischengelagert werden können und daher häufiger für den ersten Auftrag der Kopie der Auftrag-Abfolge ein passendes Fertigungsobjekt dadurch auf den ersten Platz der Fertigungsobjekt-Abfolge vorgezogen werden kann, daß Fertigungsobjekte in den Sortierpuffer eingestellt werden.

Ein Fertigungsprozeß z. B. für Kraftfahrzeuge umfaßt mehrere Teilprozesse, vor denen Auswahlvorgänge gemäß dem Oberbegriff des Anspruchs 1 durchgeführt werden. Eine Ausgestaltung sieht vor, daß für jeden dieser Teilprozesse eine eigene Kopie der Auftrags-Abfolge erzeugt wird, die ausschließlich für Auswahlvorgänge dieses einen Teilprozesses verwendet wird. Gemäß der Ausgestaltung nach Anspruch 12 wird eine Kopie hingegen für zwei Teilprozesse verwendet, nämlich den Teilprozeß des Verfahrens als erstem und einem weiteren nachfolgenden Teilprozeß als zweitem Teilprozeß. Der erste Teilprozeß ist beispielsweise der Rohbau eines Fertigungsprozesses für Kraftfahrzeuge, der zweite die Lackierung. Die Abfolge der Aufträge in der Kopie wird gemäß der Reihenfolge, in der die Aufträge vor dem Eintreten in den Teilprozeß ausgewählt werden, verändert. Hierbei wird der jeweils ausgewählte Auftrag an erste Stelle in die Kopie eingefügt. Die Kopie wird für Auswahlvorgänge für den zweiten Teilprozeß wiederverwendet. Die Auswahlvorgänge für den zweiten Teilprozeß werden auf die gleiche Weise wie für den ersten Teilprozeß durchgeführt. Möglich ist, für den ersten Teilprozeß eine andere Verweildauer-Schranke als für den zweiten Teilprozeß vorzugeben.

Wie oben bereits dargelegt, werden Lieferanten für einen weiteren Teilprozeß gemäß der Auftrags-Abfolge damit beauftragt, auftragspezifische Teilsysteme zu fertigen und zu liefern, die im zweiten Teilprozeß für die Bearbeitung der Fertigungsobjekte verwendet werden. Der weitere Teilprozeß ist beispielsweise das Gewerk Inneneinbau, in dem in die lackierten Karosserien verschiedene Teilsysteme, z. B. Cockpit und Kabelbäume, eingebaut werden. Cockpit und Kabelbäume werden gemäß der Auftrags-Abfolge auftragspezifisch gefertigt.

Die Ausgestaltung nach Anspruch 13 sieht vor, daß die Fertigungsobjekte nacheinander zwei Teilprozesse durchlaufen. Um Aufträge und Fertigungsobjekte für den zeitlich ersten dieser Teilprozesse auszuwählen, wird eine Kopie der Auftrags-Abfolge erzeugt, und Aufträge aus dieser Kopie werden ausgewählt. Die Auswahlvorgänge für den zweiten Teilprozeß hingegen werden mit der (Original-)Auftrags-Abfolge durchgeführt. Insbesondere im gerade beschriebenen Beispiel werden auftragspezifische Teilsysteme hergestellt, so daß im Teilprozeß "Gewerk Inneneinbau" als zweitem Teilprozeß ein Auftrag meist nur noch zu einem einzigen Fertigungsobjekt und/oder einem Satz von auftragspezifischen Teilsystemen paßt. Eine Kopie braucht daher nicht angefertigt zu werden.

Die Ausgestaltung nach Anspruch 14 zeigt einen weiteren Wert auf, um automatisch eine Kennziffer des Teilprozesses zu ermitteln, nämlich die Reihenfolge-Güte. Vorzugsweise werden dann, wenn diese Reihenfolge-Güte größer als eine vorgegebene obere oder kleiner als eine vorgegebene untere Schranke wird, Maßnahmen ergriffen. Die Reihenfolge-Güte ist gemäß Anspruch 15 beispielsweise
- der größte Wert aller Relativ-Positionen,
- der kleinste Wert aller Relativ-Positionen
- und/oder der Mittelwert aller Relativ-Positionen.

In Anspruch 16 wird eine Ausgestaltung der Prüfung, ob ein Auftrag und ein Fertigungsobjekt zueinander passen oder nicht, festgelegt. Jeder Auftrag umfaßt Merkmale des auftragspezifisch zu fertigenden Produkts. Jedes Fertigungsobjekt umfaßt Merkmale, die im Teilprozeß gefertigt werden. Beispiele für diese Merkmale sind im Falle von Kraftfahrzeugen z. B. die Festlegungen Rechtslenker / Linkslenker oder Limousine /Coupe oder das Vorhandensein oder Fehlen möglicher Sonderausstattungen. Bei der Prüfung, ob ein Fertigungsobjekt und ein Auftrag zueinander passen, werden die Fertigungsobjekt-Merkmale mit einer Teilmenge der Produkt-Merkmale verglichen. Vorzugsweise besteht diese Teilmenge ausschließlich aus Produkt-Merkmalen, die bereits im Teilprozeß gefertigt werden - nur diese brauchen für eine Prüfung herangezogen werden. Merkmale, die erst in späteren Teilprozessen gefertigt werden, werden bei Prüfungen für den Teilprozeß nicht berücksichtigt. Ist beispielsweise eine Auswahl für den Teilprozeß "Rohbau" durchzuführen, so brauchen Merkmale, die sich auf die Farbe oder die Innenausstattung eines zu fertigenden Kraftfahrzeugs beziehen, in der Regel nicht in die Prüfung einbezogen zu werden.

Gemäß Anspruch 20 wird das Vorziehen des ausgewählten Fertigungsobjekts auf den ersten Platz der Fertigungsobjekt-Abfolge mit Hilfe eines Sortierpuffers durchgeführt. Diese Ausführungsform ist insbesondere dann von Vorteil, wenn die Gestaltung des Fertigungsprozesses und/oder die zur Verfügung stehenden Räumlichkeiten in einer Fertigungsstätte es nicht erlauben, daß ein Fertigungsobjekt der Abfolge ein voriges Fertigungsobjekt überholt. Falls der Sortierpuffer nicht genügend freie Plätze dafür bietet, das ausgewählte Fertigungsobjekt nach vorne vorzuziehen, wird die Auswahl von Fertigungsobjekt und Auftrag rückgängig gemacht. Für diesen Auftrag kann nicht ausgeschlossen werden, daß die Verweildauer die vorgegebene Schranke übersteigt.

Im folgenden wird ein Ausführungsbeispiel der Erfindung anhand der beiliegenden Zeichnungen näher beschrieben. Dabei zeigen:
- Fig. 1.: die Reihenfolge von acht Gewerken eines Fertigungsprozesses zur Herstellung von Kraftfahrzeugen;
- Fig. 2.: die Fertigungsobjekte und Aufträge im Ausführungsbeispiel nach dem ersten Auswahlvorgang;
- Fig. 3.: die Fertigungsobjekte und Aufträge im Ausführungsbeispiel nach dem zweiten Auswahlvorgang;
- Fig. 4.: die Fertigungsobjekte und Aufträge im Ausführungsbeispiel nach dem fünften Auswahlvorgang;
- Fig. 5.: die Fertigungsobjekte und Aufträge im Ausführungsbeispiel nach dem achten Auswahlvorgang;
- Fig. 6.: die Fertigungsobjekte und Aufträge im Ausführungsbeispiel nach dem zehnten Auswahlvorgang.

Das Ausführungsbeispiel bezieht sich auf einen Fertigungsprozeß zur Herstellung von Kraftfahrzeugen. Dieser Fertigungsprozeß umfaßt folgende zehn Gewerke, die ein Fertigungsobjekt nacheinander durchläuft, damit aus ihm ein Kraftfahrzeug hergestellt wird:
- Fahrzeug-Einplanung,
- Vorlauf-Logistik 100.1: der erforderliche Vorlauf für die Produktion, z. B. um Lieferanten zu informieren und/oder zu beauftragen,
- Rohbau 100.2,
- Oberfläche 100.3, insbes. Lackierung,
- Produktions-Logistik 100.4, durch die insbesondere Zeiten für
   - Transporte innerhalb der Fertigungsstätte,
   - unterschiedliche Arbeitszeiten der "Gewerke"
   - und Zusammenstellen der Produkte in der Reihenfolge, in der nachfolgende Teilprozesse diese benötigen,
   - berücksichtigt werden,
- Inneneinbau 100.5 als Teilprozeß, der alle Montagen in das Innere des Autos zusammenfaßt, z. B. Cockpit, Sitze, Verkleidungen,
- Fahrwerk 100.6 als Teilprozeß, der alle Montagen von unten zusammenfaßt, z. B. Motor, Triebstrang, Achsen, Räder, Kabel,
- Einfahren 100.7 einschließlich Einstellungen z. B. an Beleuchtung, Bremsen, Fahrwerk
- Wagen-Fertigstellung 100.8 einschließlich erforderlicher Nacharbeiten, und
- Schlußabnahme.

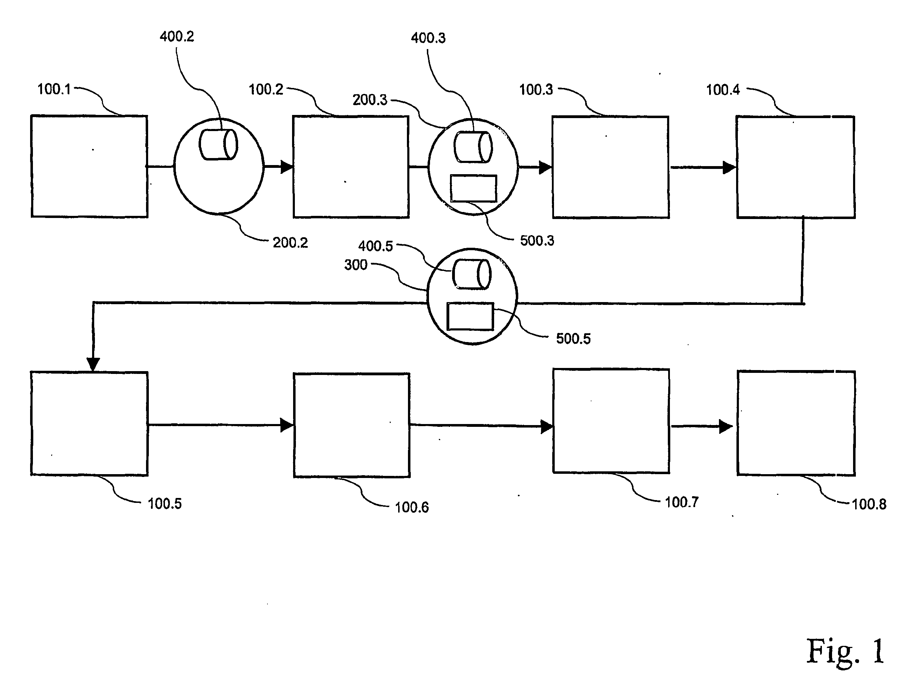

Fahrzeug-Einplanung und Schlußabnahme erfordern keine Durchlaufzeiten, so daß sie im folgenden nicht berücksichtigt werden. In welcher Reihenfolge die Fertigungsobjekte die übrigen acht Gewerke des Fertigungsprozesses durchlaufen, zeigt Fig. 1.

Jedes Gewerk umfaßt einen oder mehrere Teilprozesse. Die Teilprozesse werden so voneinander abgegrenzt, daß keine Teilprozesse parallel oder alternativ ausgeführt werden. Vielmehr werden die Teilprozesse so definiert, daß Verzweigungen nur innerhalb eines Teilprozesses auftreten. Beispielsweise umfaßt der Teilprozeß 100.3 ("Oberfläche") die beiden Arbeitsschritte 110.1 ("Grundlackierung") und 110.2 ("Decklackierung"). Im Arbeitsschritt 110.1 werden beispielsweise eine Kathodische Tauchlackierung der vom Rohbau fertiggestellten Fertigungsobjekte durchgeführt und anschließend ein Grundlack ("Füller") aufgetragen. Anschließend wird im Arbeitsschritt 110.2 der Decklack aufgetragen, der die Farbe des Kraftfahrzeugs bestimmt, und anschließend Klarlack ergänzt. In Abhängigkeit von der vorgegebenen Farbe werden der Decklack und davon abhängig der Grundlack ausgewählt.

Erfindungsgemäß durchläuft eine Abfolge 70 von Fertigungsobjekten 20.1, 20.2, ... diesen Fertigungsprozeß von Anfang bis Ende. Am Anfang existiert das Fertigungsobjekt nur "auf dem Papier", am Ende des Fertigungsprozesses ist ein fertiges Kraftfahrzeug entstanden. Parallel hierzu durchläuft eine Abfolge 50 von Aufträgen 10.1, 10.2, ... denselben Fertigungsprozeß. In diesem Beispiel bezieht sich jeder Auftrag auf ein Kraftfahrzeug. Dieses Kraftfahrzeug wird auftragsspezifisch gefertigt, also so, daß es die im Auftrag spezifizierten Anforderungen des Kunden erfüllt. Typischerweise beginnt das Fertigungsobjekt den Durchlauf durch den Fertigungsprozeß erst dann, wenn der Auftrag vorliegt. Vorzugsweise wird jedes Kraftfahrzeug aufgrund eines Auftrags gefertigt. Jeder Auftrag bezieht sich auf ein baubares Kraftfahrzeug, und die Ausführung jedes Auftrags wird nach Entgegennahme des Auftrags zumindest begonnen. Damit durchlaufen genauso viele Aufträge wie Fertigungsobjekte den Fertigungsprozeß. Zu jedem Zeitpunkt umfaßt die Kopie 60 der Auftrags-Abfolge 50 genauso viele Aufträge wie die Original-Auftrags-Abfolge 50.

Vorzugsweise werden zusätzliche fiktive Aufträge erzeugt, die sich auf ein unfertiges Kraftfahrzeug beziehen. Aufgrund eines solchen fiktiven Auftrags wird beispielsweise ein Fertigungsobjekt erzeugt, das für eine Prüfung oder Erprobung während der Fertigung vorsätzlich zerstört wird.

Der Auftrag liegt in elektronischer Form vor und umfaßt z. B. folgende Festlegungen für ein Kraftfahrzeug als auftragsspezifisch zu fertigendes Produkt:
- die Baureihe,
- eine Aufbauart, z. B. Limousine oder Coupe,
- Linkslenker oder Rechtslenker,
- Farbe der Lackierung
- Art der Lackierung (z. B. Metallic-Lackierung),
- eine Motor-Variante,
- Allrad- oder Einachsantrieb,
- geschlossenes Dach oder Schiebedach,
- mit oder ohne Durchlademöglichkeit im Fahrzeuginneren,
- mit oder ohne Anhängerkupplung,
- gewünschte Sonderausstattungen für den Inneneinbau, z. B. bestimmte Leder oder Stoffe oder eine elektronische Navigationshilfe,
- gewünschte Sonderausstattungen für Fahrwerk einschließlich Antriebstrang, z. B. Kraftstoffanlage, Felgen, elektronische Hilfssysteme, z. B. Fensterheber oder elektronischer Bremsassistent,
- und ein vereinbarter Auslieferungstermin und ein davon abgeleiteter Schlußabnahmetermin.

Vom Schlußabnahmetermin jedes Auftrags werden einerseits der Produktionsbeginn für diesen Auftrag, andererseits die Liefertermine für die zugelieferten Teilsysteme abgeleitet. Hierfür wird ausgehend vom Schlußabnahmetermin in Abhängigkeit von erreichbaren Durchlaufzeiten durch Teilprozesse und verfügbaren Ressourcen rückwärts gerechnet.

Im Fertigungsprozeß ist ein sogenannter Taufpunkt 300 definiert. Dieser Taufpunkt 300 ist der Punkt, an dem die Auftrags-Abfolge 50 und die Fertigungsobjekt-Abfolge 70 verbindlich einander zugeordnet werden. Ab diesem Punkt ist also jedem Fertigungsobjekt der Abfolge 70 ein Auftrag fest zugeordnet. Der Taufpunkt 300 wird so in den Fertigungsprozeß gelegt, daß er einerseits möglichst weit hinten im Fertigungsprozeß auftritt, andererseits viele Teilprozesse, in denen variantenreiche und oft von Auftrag zu Auftrag variierende Teilsysteme in das Fertigungsobjekt eingebaut werden, erst nach dem Taufpunkt kommen. In diesem Beispiel ist der Taufpunkt unmittelbar vor den Inneneinbau gelegt. Am Taufpunkt wird bei Bedarf die Original-Auftrags-Reihenfolge verändert, wenn das erste Fertigungsobjekt und der erste Auftrag nicht zueinander passen. In vorigen Auswahlpunkten wird hingegen nur eine Kopie der Auftrags-Reihenfolge verändert.

Die Lieferanten, die Teilsysteme liefern, welche in Teilprozessen nach dem Taufpunkt 300 eingebaut werden, werden auf Basis der Auftrags-Abfolge 50 beauftragt. Ein Lieferant kann ein externer Lieferant, also ein rechtlich selbständiges Unternehmen, oder ein interner Lieferant, also ein Bereich des Kraftfahrzeug-Herstellers, sein. Die erfindungsgemäße Produktionssteuerung unterscheidet nicht zwischen internen und externen Lieferanten. Manche Teilsysteme werden für die Fertigung von auftragsspezifischen benötigt, ohne in ein Fertigungsobjekt eingebaut zu werden, z. B. Gußformen für Zylinderköpfe.

Aus jedem Auftrag der Auftrags-Abfolge 50 werden mit Hilfe einer Stückliste des Kraftfahrzeuges Aufträge für Lieferanten abgeleitet. Möglich ist, daß für ein Kraftfahrzeug mehrere Exemplare des Teilsystems zu fertigen sind, z. B. vier Sitze pro Kraftfahrzeug. Dadurch entsteht für jeden Lieferanten eine Lieferauftrags-Abfolge.

Der Taufpunkt 300 wird so weit hinten wie möglich im Fertigungsprozeß angeordnet. Dadurch erhalten die Lieferanten eine möglichst lange Vorlaufzeit, nämlich die zwischen dem Eintritt des Fertigungsobjekts in den ersten Teilprozeß 100.1 des Fertigungsprozesses und dem Erreichen des Taufpunktes 300. Bevorzugt wird der Taufpunkt 300 vor dem Teilprozeß 100.5 ("Gewerk Inneneinbau") gelegt. Die für den Inneneinbau hergestellten Teilsysteme, z. B. Kabelbäume, Cockpit und Sitze, sind in ihrer Gesamtheit so auftragsspezifisch, daß sie sich in der Regel nur für ein einziges Fertigungsobjekt verwenden lassen.

Vor diesem Taufpunkt wird ein Auftrag nur temporär für z. B. jeweils dem nachfolgenden Teilprozeß einem Fertigungsobjekt zugeordnet, und ein Auftrag kann in einem Teilprozeß einem Fertigungsobjekt und in einem nachfolgenden Teilprozeß einem anderen Fertigungsobjekt zugeordnet werden.

Jeweils ein Auswahlpunkt befindet sich vor folgenden Teilprozessen:
- der Auswahlpunkt 200.2 vor dem Teilprozeß 100.2 (Gewerk Rohbau),
- der Auswahlpunkt 200.3 vor dem Teilprozeß 100.3 (Gewerk Oberfläche) und
- der Taufpunkt 300 als Auswahlpunkt vor dem Teilprozeß 100.5 (Gewerk Inneneinbau).

In den beiden Auswahlpunkten 200.2 und 200.3 werden wiederholt ein Fertigungsobjekt der Fertigungsobjekt-Abfolge 70 und ein Auftrag der Kopie 60 der Auftrags-Abfolge ausgewählt. Im Taufpunkt 300 werden ein Fertigungsobjekt der Fertigungsobjekt-Abfolge und ein Auftrag der Auftrags-Abfolge 50 ausgewählt. In allen drei Auswahlpunkten werden Fertigungsobjekt und Auftrag so ausgewählt, daß sie zueinander passen. Das ausgewählte Fertigungsobjekt wird gemäß des ausgewählten Auftrags im jeweils nachfolgenden Teilprozeß bearbeitet. Hierfür wird das ausgewählte Fertigungsobjekt auf den ersten Platz der Fertigungsobjekt-Abfolge 70 vorgezogen. Der Fertigungsprozeß umfaßt die hierfür erforderlichen technischen Mittel, um dieses Vorziehen zu realisieren. Beispielsweise werden die Fertigungsobjekte, die sich in der Fertigungsobjekt-Abfolge vor dem ausgewählten Fertigungsobjekt befinden, in einen Pufferspeicher eingestellt. Ein solcher Pufferspeicher ist z. B. aus DE 19815619 A1 bekannt. Oder sie werden auf einen Hof gefahren. Oder das ausgewählte Fertigungsobjekt wird aus dem Fertigungsprozeß ausgeschleust und überholt alle vor ihm befindlichen Fertigungsobjekte der Fertigungsobjekt-Abfolge 70.

In jedem Auswahlpunkt werden ein Fertigungsobjekt und ein Auftrag, die zueinander passen, ausgewählt. Vorzugsweise ist jedem der Teilprozesse mit vorgelagertem Auswahlpunkt je eine Auswahl-Teilmenge von solchen Merkmalen zugeordnet, die in vorigen Teilprozessen hergestellt wurden. Ein Fertigungsobjekt und ein Auftrag werden dann als zueinander passend gewertet, wenn jedes Produkt-Merkmal des Auftrags, das der Auswahl-Teilmenge angehört, vereinbar mit allen Merkmalen des Fertigungsobjekts ist.

Vorzugsweise umfaßt jede Auswahl-Teilmenge als ein Merkmal den vom Teilprozeß geforderten Fertigstellungs-Termin, also der Termin, an dem ein zum Auftrag passendes Fertigungsobjekt spätestens im Teilprozeß gemäß des Auftrags bearbeitet und den Teilprozeß verlassen haben muß.

Weiterhin ist jedem Teilprozeß eine Bearbeitungs-Teilmenge zugeordnet. Mit Hilfe der Merkmale eines ausgewählten Auftrags und den Merkmalen der Bearbeitungs-Teilmenge wird ein Bearbeitungsauftrag an den Teilprozeß abgeleitet. Das Fertigungsobjekt wird im Teilprozeß gemäß des Bearbeitungsauftrags abgeleitet.

Beispielsweise ist dem Teilprozeß 100.2 (Gewerk Rohbau) eine Auswahl-Teilmenge mit folgenden Merkmalen zugeordnet:
- Baureihe,
- Aufbauart.

Die Bearbeitungs-Teilmenge des Teilprozesses 100.2 umfaßt z. B. folgende Merkmale:
- Baureihe,
- Aufbauart,
- Linkslenker oder Rechtslenker,
- geschlossenes Dach oder Schiebedach,
- mit oder ohne Anhängerkupplung.

Merkmale, die im Teilprozeß 100.2 noch keine Rolle spielen, sondern erst in nachfolgenden Teilprozessen, sind weder in der Auswahl-Teilmenge noch in der Bearbeitungs-Teilmenge des Teilprozesses 100.2 enthalten, z. B. die Farbe und Art der Lackierung oder die Motor-Variante.

Im Auswahlpunkt 200.2 wird ein Fertigungsobjekt einer bestimmten Baureihe und einer bestimmten Aufbauart für den Teilprozeß 100.2 ausgewählt. Als Bearbeitungsauftrag wird die Herstellung eines Fertigungsobjekts dieser Baureihe und dieser Aufbauart mit den Merkmalen "Linkslenker" und "Schiebedach" hergeleitet.

Die Auswahl-Teilmenge des Teilprozesses 100.3 (Gewerk Oberfläche) umfaßt z. B. folgende Merkmale:
- Baureihe,
- Aufbauart,
- Linkslenker oder Rechtslenker,
- geschlossenes Dach oder Schiebedach,
- mit oder ohne Anhängerkupplung.

Die Bearbeitungs-Teilmenge des Teilprozesses 100.3 umfaßt z. B. folgende Merkmale:
- Baureihe,
- Aufbauart,
- Farbe der Grundlackierung,
- Farbe der Decklackierung,
- Art der Decklackierung.

Im Auswahlpunkt 200.3 wird z. B. ein Fertigungsobjekt einer bestimmten Baureihe und einer bestimmten Aufbauart mit den Merkmalen "Linkslenker" und "Schiebedach" für den Teilprozeß 100.5 und einem Soll-Schlußabnahmetermin ausgewählt. Als Bearbeitungsauftrag für den Teilprozeß 100.5 wird die Lackierung dieses Fertigungsobjekts in einer bestimmten Farbe und Art der Lackierung hergeleitet.

Die Auswahl-Teilmenge des Teilprozesses 100.5 (Gewerk Inneneinbau) besteht z. B. aus folgenden Merkmalen:
- Baureihe,
- Aufbauart,
- Linkslenker oder Rechtslenker,
- geschlossenes Dach oder Schiebedach.
- Farbe der Grundlackierung,
- Farbe der Decklackierung,
- Art der Decklackierung.

Die Bearbeitungs-Teilmenge des Teilprozesses 100.5 (Gewerk Inneneinbau) umfaßt z. B. folgende Merkmale:
- Baureihe,
- Aufbauart,
- Linkslenker oder Rechtslenker,
- geschlossenes Dach oder Schiebedach.
- mit oder ohne Durchlademöglichkeit im Fahrzeuginneren,
- mit oder ohne Anhängerkupplung,
- gewünschte Sonderausstattungen für den Inneneinbau.

Auch für den Teilprozeß 100.6 (Gewerk Fahrwerk) ist eine Bearbeitungs-Teilmenge vorgegeben. Eine Auswahl-Teilmenge ist nicht erforderlich, weil im Taufpunkt 300 ein Auftrag einem Fertigungsobjekt fest zugeordnet wird.

Bevorzugt werden die Kraftfahrzeuge im Fertigungsprozeß in Taktfertigung hergestellt. Eine Soll-Taktzeit T ist für den gesamten Fertigungsprozeß vorgegeben. Zwei aufeinanderfolgende Fertigungsobjekte der Fertigungsobjekt-Abfolge 70 werden im zeitlichen Abstand T einem Teilprozeß zugeführt.

Den Auswahlpunkten 200.2, 200.3 und 300 ist jeweils ein zunächst leerer elektronischer Zwischenspeicher 400.2, 400.3 und 400.5 für Aufträge zugeordnet. Insgesamt umfaßt der Fertigungsprozeß also drei Zwischenspeicher 400.2, 400.3 und 400.5. Der Fertigungsprozeß umfaßt weiterhin einen Sortierpuffer 500.3, in dem Fertigungsobjekte nach Verlassen des Teilprozesses 100.2 (Gewerk Rohbau) und vor dem Eintritt in den Teilprozeß 100.3 (Gewerk Oberfläche) zwischengelagert werden können. Der Sortierpuffer 500.3 ermöglicht einen wahlfreien Zugriff auf die in ihm zwischengelagerten Fertigungsobjekte, d. h. zu jedem Auswahl-Zeitpunkt kann jedes Fertigungsobjekt dem Sortierpuffer wieder entnommen werden. Ein entsprechender Sortierpuffer 500.5 ist zwischen den Teilprozessen 100.3 und 100.5 (Gewerk Inneneinbau) vorgesehen.

Im folgenden wird beispielhaft die erfindungsgemäße Durchführung der Auswahlvorgänge im Auswahlpunkt 200.3 nach dem Teilprozeß 100.2 (Gewerk Rohbau) und vor dem Teilprozeß 100.3 (Gewerk Oberfläche) beschrieben.

Für den gesamten Fertigungsprozeß sind eine Gesamt-Soll-Bearbeitungszeit und eine maximale Gesamt-Durchlaufzeit durch den Fertigungsprozeß vorgegeben. Ein Fertigungsobjekt durchläuft dann den Fertigungsprozeß in der Gesamt-Soll-Bearbeitungszeit, wenn es ohne Wartezeit vor dem und ohne Verzögerung im Fertigungsprozeß bearbeitet wird. Die maximale Gesamt-Durchlaufzeit wird als Kompromiß zwischen den folgenden beiden Anforderungen abgeleitet:
- Ein möglichst großer Termintreuegrad soll erreicht werden. Ein Auftrag wird dann als termintreu abgearbeitet bezeichnet, wenn das spezifizierte Produkt zum Schlußabnahmetermin oder bereits früher fertiggestellt wurde. Denn zu spät ausgelieferte Produkte können zu Vertragsstrafen führen.
- Die durchschnittliche Lagerungs-Zeitspanne für Produkte, die vor dem Schlußabnahmetermin fertiggestellt wurden, soll möglichst gering sein. Denn die Lagerhaltung bindet Kapital, erfordert Platz für die Produkte und birgt das Risiko von Schäden an fertiggestellten Produkten während der Lagerhaltung. Genau zum Schlußabnahmetermin oder verspätet fertiggestellte Produkte erfordern hingegen keine Lagerhaltung.

Durch Aufteilung der Gesamt-Soll-Bearbeitungszeit auf die einzelnen Teilprozesse wird für jeden Teilprozeß eine Soll-Bearbeitungszeit abgeleitet. Aus der Differenz zwischen maximaler Gesamt-Durchlaufzeit und Gesamt-Soll-Bearbeitungszeit resultiert eine maximale Gesamt-Verzögerungszeit, welche die maximal zulässigen Wartezeiten vor den einzelnen Teilprozessen sowie erforderliche Nacharbeiten in einzelnen Teilprozessen umfaßt. Aus der Gesamt-Verzögerungszeit wird für jeden Teilprozeß eine maximal zulässige Wartezeit abgeleitet, die ein Fertigungsobjekt zwischen Verlassen des vorigen und Einführen in den jetzigen Teilprozeß warten darf.

Vorzugsweise sind damit für jedes Gewerk und jeden Teilprozeß eine Soll-Bearbeitungszeit und eine maximale Durchlaufzeit festgelegt. Ein Fertigungsobjekt durchläuft dann einen Teilprozeß in der Soll-Bearbeitungszeit, wenn es ohne Wartezeit vor dem und ohne Verzögerung im Teilprozeß bearbeitet wird und keine Nacharbeit z. B. aufgrund von Qualitätsmängeln erforderlich ist. Der Teilprozeß ist so organisiert, daß jedes Fertigungsobjekt für den Durchlauf durch den Teilprozeß längstens die maximale Durchlaufzeit benötigt.

Die Aufträge 10.1, 10.2, 10.3, ... von Kunden für Fahrzeuge einer bestimmten Baureihe werden in einer Auftrags-Abfolge 50 angeordnet. Aufgrund dieser Auftrags-Abfolge 50 wird die Produktion von Fertigungsobjekten für Produkte dieser Baureihe begonnen. Diese Fertigungsobjekte verlassen nacheinander den Teilprozeß 100.2 (Gewerk Rohbau) in der Fertigungsobjekt-Abfolge 20.1, 20.2, 20.3, ... Eine Kopie 60 dieser Auftrags-Abfolge 50 mit den Auftrags-Kopien 10.1, 10.2, 10.3, ... wird erzeugt.

Als Verweildauer-Schranke VS für den elektronischen Zwischenspeicher 400.3 des Auswahlpunkts 200.3 ist z. B. der Wert 3*T, also drei Taktzeiten, vorgegeben. Somit beläuft sich die Schranke auf 3 Auswahlvorgänge.

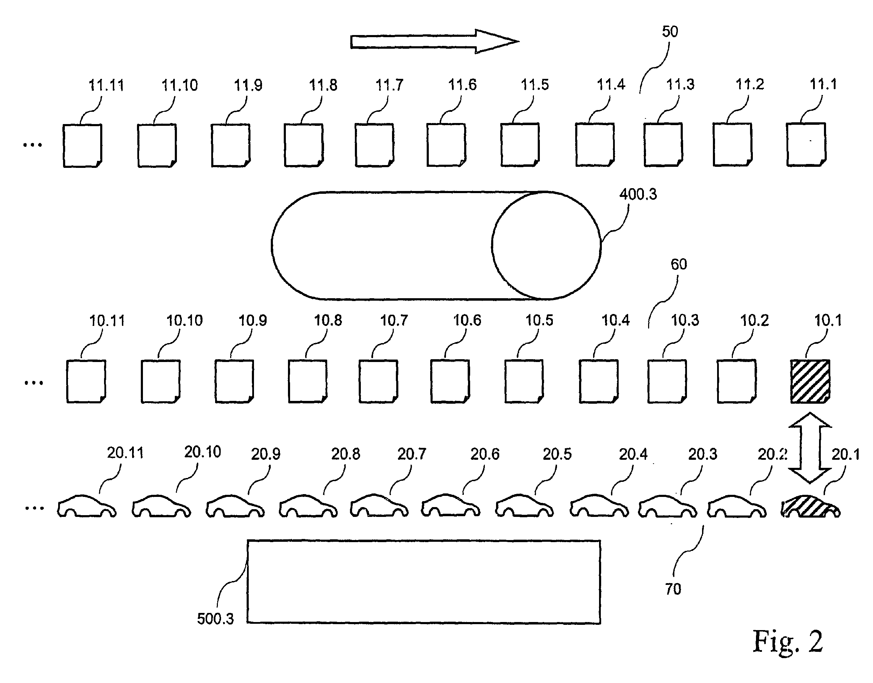

Im folgenden wird die Durchführung von Auswahlvorgängen detailliert beschrieben. Fig. 2 bis Fig. 6 zeigen Momentaufnahmen der Abfolgen 50, 60 und 70 sowie der Inhalte von Zwischenspeicher 400.3 und Sortierpuffer 500.3 nach dem ersten, zweiten, vierten, siebten bzw. neunten Auswahlvorgang. Das jeweils zuletzt ausgewählte Fertigungsobjekt und der ausgewählte Auftrag sind durch einen Doppelpfeil verbunden. Ein ausgewählter Auftrag und ein ausgewähltes Fertigungsobjekt, die zueinander passen, sind durch gleichartige Schraffur gekennzeichnet. Die Verweildauer eines Auftrags, gemessen in Takten, ist durch eine Zahl in einem Kreis gekennzeichnet.

Die Auswahlvorgänge im Auswahlpunkt 200.3 für die aktuelle Baureihe beginnen zu einem Zeitpunkt T_0 und finden zu Zeitpunkten T_i = T_0 + i*T (i=0,1,2,3,...) statt. Die für die Durchführung eines Auswahlvorgangs benötigte Zeit ist klein im Vergleich zur Taktzeit T.

Zum Zeitpunkt T_0 werden der Auftrag 10.1 der Kopie 60 der Auftrags-Abfolge 50 und das Fertigungsobjekt 20.1, die zueinander passen, ausgewählt. Das Fertigungsobjekt 20.1 wird dem Teilprozeß 100.3 zugeführt und in diesem gemäß des ausgewählten Auftrags 10.1 bearbeitet. Der ausgewählte Auftrag 10.1 hat eine Relativ-Position von 0 in der Auswahl-Reihenfolge im Vergleich zur Auftrags-Abfolge 50.

Fig. 2 zeigt als Momentaufnahme die Fertigungsobjekte und Aufträge nach Durchführung dieses ersten Auswahlvorgangs. Die Aufträge und Fertigungsobjekte sind von links kommend dargestellt. Der ausgewählte Auftrag 10.1 und das ausgewählte Fertigungsobjekt 20.1 sind schraffiert dargestellt und durch einen Doppelpfeil verbunden. Der elektronische Zwischenspeicher 400.3 und der Sortierpuffer 500.3 für Fertigungsobjekte sind noch leer.

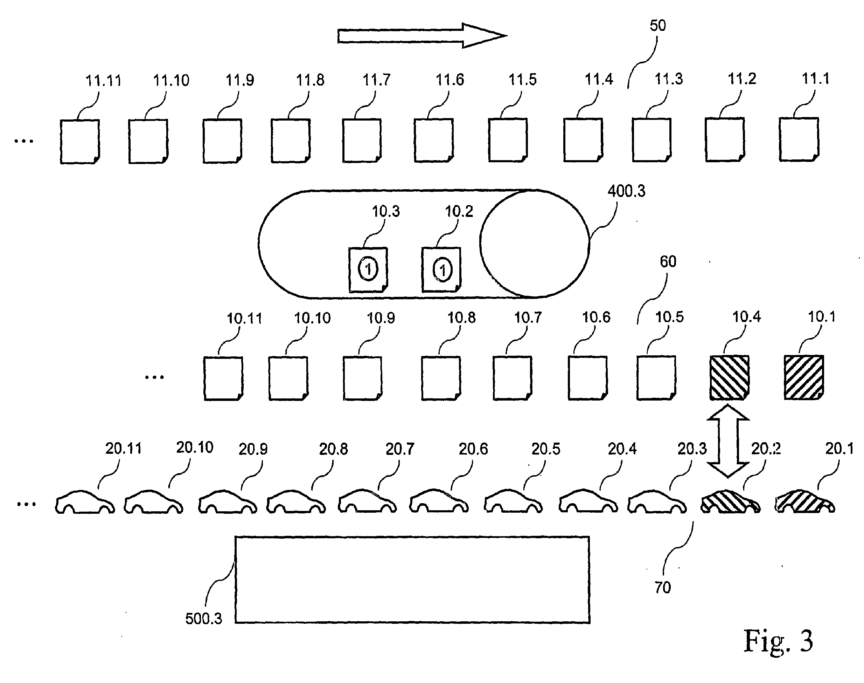

Zum Zeitpunkt T_1 = T_0 + T wird festgestellt, daß der Auftrag 10.2 und das Fertigungsobjekt 20.2 nicht zueinander passen, weil der Auftrag 10.2 sich auf einen Linkslenker bezieht, das Fertigungsobjekt 20.2 hingegen ein Rechtslenker ist. Der Auftrag 10.2 wird in den Zwischenspeicher 400.3 eingestellt. Auch der Auftrag 10.3 paßt nicht zum Fertigungsobjekt 20.2, weil der Auftrag 10.3 sich auf ein Kraftfahrzeug mit geschlossenem Dach bezieht, das Fertigungsobjekt 20.3 hingegen eines mit Schiebedach ist. Daher wird auch der Auftrag 10.3 in den Zwischenspeicher 400.3 eingestellt. Der Auftrag 10.4 und das Fertigungsobjekt 20.2 passen zueinander und werden daher ausgewählt. Das Fertigungsobjekt 20.2 wird dem Teilprozeß 100.3 zugeführt und in diesem gemäß des ausgewählten Auftrags 10.4 bearbeitet. Im Zwischenspeicher 400.3 befinden sich nach dem Zeitpunkt T_1 die beiden Aufträge 10.2 und 10.3 mit einer Verweildauer V von jeweils 0 (Auswahlvorgängen). Der ausgewählte Auftrag 10.4 hat eine Relativ-Position von +2, weil er um 2 Auswahlvorgänge früher als der Auftrags-Abfolge 50 entsprechend ausgewählt wurde. Fig. 3 zeigt als Momentaufnahme die Auftrags-Abfolge 50 und deren Kopie 60, die Fertigungsobjekt-Abfolge 70, den Zwischenspeicher 400.3 und den Sortierpuffer 500.3 nach Durchführung des zweiten Auswahlvorgangs.

Zum Zeitpunkt T_2 = T_0 + 2*T wird festgestellt, daß weder der Auftrag 10.2 noch der Auftrag 10.3 zum Fertigungsobjekt 20.3, dem nunmehr ersten Fertigungsobjekt der Fertigungsobjekt-Abfolge 70, passen. Daher werden der erste Auftrag der Kopie 60 der Auftrags-Abfolge, nämlich der Auftrag 10.5, und das Fertigungsobjekt 20.3, die zueinander passen, ausgewählt. Das Fertigungsobjekt 20.3 wird dem Teilprozeß 100.3 zugeführt und in diesem gemäß des ausgewählten Auftrags 10.5 bearbeitet. Im Zwischenspeicher 400.3 befinden sich nach dem Zeitpunkt T_2 die beiden Aufträge 10.2 und 10.3 mit einer Verweildauer V von jeweils 1 (Auswahlvorgängen). Der ausgewählte Auftrag 10.5 hat eine Relativ-Position von +2.

Auch zum Zeitpunkt T_3 = T_0 + 3*T werden zunächst die Aufträge im Zwischenspeicher 400.3 mit dem ersten Fertigungsobjekt 20.4 verglichen. Beide Aufträge passen zum Fertigungsobjekt 20.4. Weil der Auftrag 10.2 den früheren Schlußabnahmetermin hat, wird dieser gemeinsam mit dem Fertigungsobjekt 20.4 ausgewählt. Der Auftrag 10.2 wird aus dem Zwischenspeicher 400.3 entfernt. Das Fertigungsobjekt 20.4 wird dem Teilprozeß 100.3 zugeführt und in diesem gemäß des ausgewählten Auftrags 10.2 bearbeitet. Im Zwischenspeicher 400.3 befindet sich nach dem Zeitpunkt T_3 der Auftrag 10.3 mit einer Verweildauer V von 2 (Auswahlvorgängen) . Der ausgewählte Auftrag 10.2 hat eine Relativ-Position von -2, weil er um 2 Auswahlvorgänge später als der Auftrags-Abfolge 50 entsprechend ausgewählt wurde.

Zum Zeitpunkt T_4 = T_0 + 4*T wird zunächst der Auftrag 10.3 mit dem Fertigungsobjekt 20.5 verglichen. Jedoch passen der Auftrag 10.3 und das Fertigungsobjekt 20.5 nicht zueinander. Auch der nächste Auftrag 10.6 der Kopie 60 der Auftrags-Abfolge und das Fertigungsobjekt 20.5 passen nicht zueinander. Daher wird der Auftrag 10.6 in den Zwischenspeicher 400.3 eingestellt. Das Fertigungsobjekt 20.5 und der nun folgende Auftrag 10.7 der Kopie 60 passen zueinander. Daher werden diese beiden ausgewählt. Das Fertigungsobjekt 20.5 wird dem Teilprozeß 100.3 zugeführt und in diesem gemäß des ausgewählten Auftrags 10.7 bearbeitet. Im Zwischenspeicher 400.3 befinden sich nach dem Zeitpunkt T_4 der Auftrag 10.3 mit einer Verweildauer V von 3 und der Auftrag 10.6 mit einer von 0 (Auswahlvorgängen). Der ausgewählte Auftrag 10.7 hat eine Relativ-Position von +2.

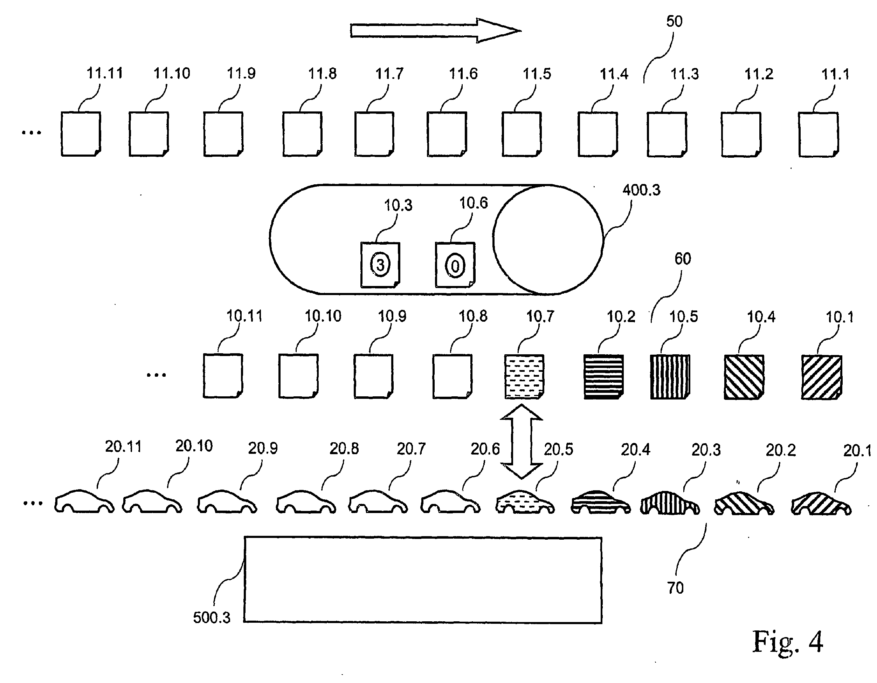

Fig. 4 zeigt als Momentaufnahme die Fertigungsobjekte und Aufträge im Ausführungsbeispiel nach dem fünften Auswahlvorgang.

Zum Zeitpunkt T_5 = T_0 + 5*T ist die Verweildauer des Auftrags 10.3 im Zwischenspeicher 400.3 größer als die vorgegebene Verweildauer-Schranke VS = 3 (Auswahlvorgänge), nämlich bereits 4 Auswahlvorgänge. Daher wird der Auftrag 10.3 ausgewählt und aus dem Zwischenspeicher 400.3 entfernt. Festgestellt wird, daß das Fertigungsobjekt 20.8 zum Auftrag 10.3 paßt, aber nicht die davor befindlichen Fertigungsobjekte 20.6 und 20.7. Die Fertigungsobjekte 20.6 und 20.7 werden daher in den Sortierpuffer 500.3 eingestellt. Das Fertigungsobjekt 20.8 wird ausgewählt, dem Teilprozeß 100.3 zugeführt und in diesem gemäß des ausgewählten Auftrags 10.3 bearbeitet. Im Zwischenspeicher 400.3 befindet sich nach dem Zeitpunkt T_5 der Auftrag 10.6 mit einer Verweildauer V von 1 (Auswahlvorgängen). Der ausgewählte Auftrag 10.3 hat eine Relativ-Position von -3.

Zum Auswahl-Zeitpunkt T_6 = T_0 + 6*T wird zunächst der im Zwischenspeicher 400.3 befindliche Auftrag 10.6 mit den beiden Fertigungsobjekten 20.6 und 20.7 im Sortierpuffer 500.3 verglichen. Jedoch paßt der Auftrag 10.6 zu keinem dieser beiden Fertigungsobjekte. In einer bevorzugten Ausführungsform wird anschließend der nächste Auftrag 10.8 der Kopie 60 der Auftrags-Abfolge mit den beiden Fertigungsobjekten 20.6 und 20.7 im Sortierpuffer 500.3 verglichen. Alternativ hierzu ist es auch möglich, das nächste Fertigungsobjekt 20.8 der Fertigungsobjekt-Abfolge 70 mit dem im Zwischenspeicher 400.3 befindliche Auftrag 10.6 zu vergleichen. Jedoch wird die bevorzugte Ausführungsform gewählt, weil das Einstellen und Entnehmen von Fertigungsobjekten in bzw. aus einem Sortierpuffer aufwendiger ist als das von Aufträgen in bzw. aus einem elektronischen Zwischenpuffer.

Im vorliegenden Beispiel passen der Auftrag 10.8 und das Fertigungsobjekt 20.6 zueinander. Beide werden zum Zeitpunkt T_6 ausgewählt. Das Fertigungsobjekt 20.6 wird dem Sortierpuffer entnommen, dem Teilprozeß 100.3 zugeführt und in diesem gemäß des ausgewählten Auftrags 10.8 bearbeitet. Im Zwischenspeicher 400.3 befindet sich nach dem Zeitpunkt T_6 der Auftrag 10.6 mit einer Verweildauer V von 2 (Auswahlvorgängen). Im Sortierpuffer 500.3 befindet sich weiterhin das Fertigungsobjekt 20.7. Der ausgewählte Auftrag 10.8 hat eine Relativ-Position von +1.

Zum Zeitpunkt T_7 = T_0 + 7*T wird zunächst der im Zwischenspeicher 400.3 befindliche Auftrag 10.6 mit dem im Sortierpuffer 500.3 befindlichen Fertigungsobjekt 20.7 verglichen, jedoch passen diese beiden nicht zueinander. Der nächste Auftrag 10.9 paßt ebenfalls nicht zum Fertigungsobjekt 20.7 im Sortierpuffer 500.3 und auch nicht zum nächsten Fertigungsobjekt 20.9 der Fertigungsobjekt-Abfolge 70. Daher wird der Auftrag 10.9 in den Zwischenspeicher 400.3 eingestellt. Der nun folgende Auftrag 10.10 und das Fertigungsobjekt 20.9 passen zueinander und werden ausgewählt. Das Fertigungsobjekt 20.9 wird dem Teilprozeß 100.3 zugeführt und in diesem gemäß des ausgewählten Auftrags 10.9 bearbeitet. Im Sortierpuffer 500.3 befinden sich weiterhin das Fertigungsobjekt 20.7. Im Zwischenspeicher 400.3 befinden sich nach dem Zeitpunkt T_7 der Auftrag 10.6 mit einer Verweildauer V von 3 und der Auftrag 10.9 mit einer Verweildauer V von 0 (Auswahlvorgängen). Der ausgewählte Auftrag 10.10 hat eine Relativ-Position von +2.

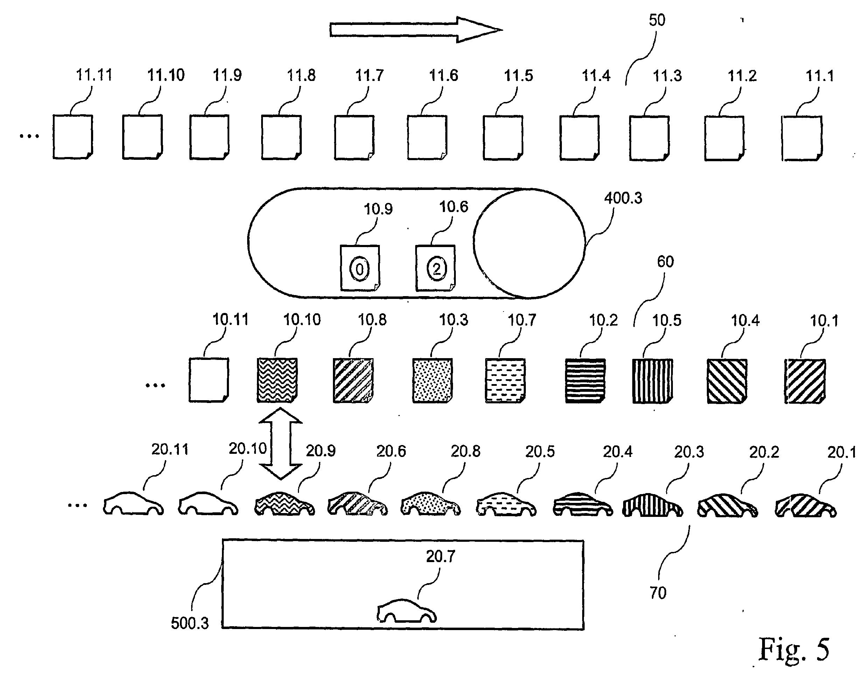

Fig. 5 zeigt als Momentaufnahme die Fertigungsobjekte und Aufträge im Ausführungsbeispiel nach dem achten Auswahlvorgang.

Zum Zeitpunkt T_8 = T_0 + 8*T wird zunächst der im Zwischenspeicher 400.3 befindliche Auftrag 10.6 mit dem im Sortierpuffer befindlichen Fertigungsobjekt 20.7 verglichen, jedoch passen diese beiden nicht zueinander. Auch der andere Auftrag im Zwischenspeicher 400.3, nämlich 10.9, und das Fertigungsobjekt 20.7 passen nicht zueinander. Der nächste Auftrag 10.11 der Kopie 60 der Auftrags-Abfolge 50 und das Fertigungsobjekt 20.7 passen ebenfalls nicht zueinander. Der Auftrag 10.11 wird in den Zwischenspeicher 400.3 eingestellt. Hingegen passen der dann folgende Auftrag 10.12 und das nächste Fertigungsobjekt 20.10 der Fertigungsobjekt-Abfolge 70 zueinander und werden ausgewählt. Im Zwischenspeicher 400.3 befinden sich nach dem Zeitpunkt T_8, also nach dem achten Auswahlvorgang, die Aufträge 10.6, 10.9 und 10.11 mit einer Verweildauer V von 3 und der Auftrag 10.9 mit einer Verweildauer V von 3, 1 bzw. 0 (Auswahlvorgängen). Der ausgewählte Auftrag 10.12 hat eine Relativ-Position von +3.

Die Verweildauer des Auftrags 10.6 liegt zum Zeitpunkt T_9 = T_0 + 9*T oberhalb der Verweildauer-Schranke. Daher wird dieser Auftrag ausgewählt. Das nächste Fertigungsobjekt, das zum Auftrag 10.6 paßt, ist das Fertigungsobjekt 20.14. Um dieses passende Fertigungsobjekt auf den ersten Platz vorziehen zu können, müssen die davor befindlichen Fertigungsobjekte 20.11, 20.12 und 20.13 in den Sortierpuffer eingestellt werden. In diesem Beispiel hat der Sortierpuffer hingegen nur drei verfügbare Plätze für Fertigungsobjekte, und außer Einstellen in den Sortierpuffer 500.3 gibt es keine Möglichkeit, ein Fertigungsobjekt nach Verlassen des Teilprozesses 100.2 vorzuziehen.

Eine der folgenden Verfahrensschritte wird ausgeführt, um fortzufahren:
- Eine Vorgehensweise wird angewendet, um das Fertigungsobjekt 20.14 vorzuziehen und dem Teilprozeß 100.3 zuzuführen, ohne den Sortierpuffer 500.3 zu benutzen. Beispielsweise wird das Fertigungsobjekt 20.14 aus der Fertigungsobjekt-Abfolge 70 ausgeschleust und mit Hilfe einer bemannten Transportvorrichtung vorgezogen und dem Teilprozeß 100.3 zugeführt. Diese Vorgehensweise ist aber oft gar nicht durchführbar oder ist aufwendig und wird daher selten angewendet.
   Der Auftrag 10.6 und ein Fertigungsobjekt, das mit Hilfe des Sortierpuffers 500.3 auf den ersten Platz vorgezogen werden kann, werden ausgewählt, obwohl der ausgewählte Auftrag 10.6 und das ausgewählte Fertigungsobjekt nicht zusammenpassen. Diese Alternative wird nur dann durchgeführt, wenn das ausgewählte Fertigungsobjekt nachträglich zum ausgewählten Auftrag passend gemacht werden kann. Dies ist vor allem dann der Fall, wenn das Fertigungsobjekt nur deshalb nicht zum Auftrag paßt, weil ein Teilsystem für das Fertigungsobjekt zu spät zugeliefert wird und anstelle im Teilprozeß 100.2 im nachfolgenden Teilprozeß 100.3 eingebaut wird.
- Die Auswahl des Auftrags 10.6 wird rückgängig gemacht, und der Auftrag 10.6 wird als nicht innerhalb der maximal zulässigen Wartezeit dem Teilprozeß 100.3 zuführbar markiert. Der Auftrag 10.6 wird an die Fahrzeug-Einplanung (Teilprozeß 100.1) zurückgeführt. Dort wird er erneut eingeplant.

In dem hier beschriebenen Beispiel wird die dritte Alternative realisiert, weil für den Teilprozeß 100.3 die ersten beiden technisch nicht realisierbar sind. Vorzugsweise wird zuvor geprüft, ob seine Fertigung prinzipiell möglich ist oder gegenwärtig z. B. aufgrund eines Ausfalls nicht möglich ist. Falls z. B. der Auftrag 10.6 Allradantrieb vorsieht und die Produktion oder Zulieferung von Allradantrieben zur Zeit völlig ausgefallen ist, wird der Auftrag 10.6 nicht eingeplant, bis der Ausfall der Produktion von Allradantrieben behoben ist.

Der Auftrag 10.9 und das erste Fertigungsobjekt 20.11 passen hingegen zueinander und werden ausgewählt. Im Zwischenspeicher 400.3 befinden sich nach dem Zeitpunkt T_9 die Aufträge 10.6 und 10.11 mit einer Verweildauer V von 4 bzw. 1 (Auswahlvorgängen). Der ausgewählte Auftrag 10.12 hat eine Relativ-Position von -1. Die Fertigungsobjekt-Abfolge 70 umfaßt bis zur erneuten Einplanung des Auftrags 10.6 ein Fertigungsobjekt mehr als die Auftrags-Abfolge 10 Aufträge.

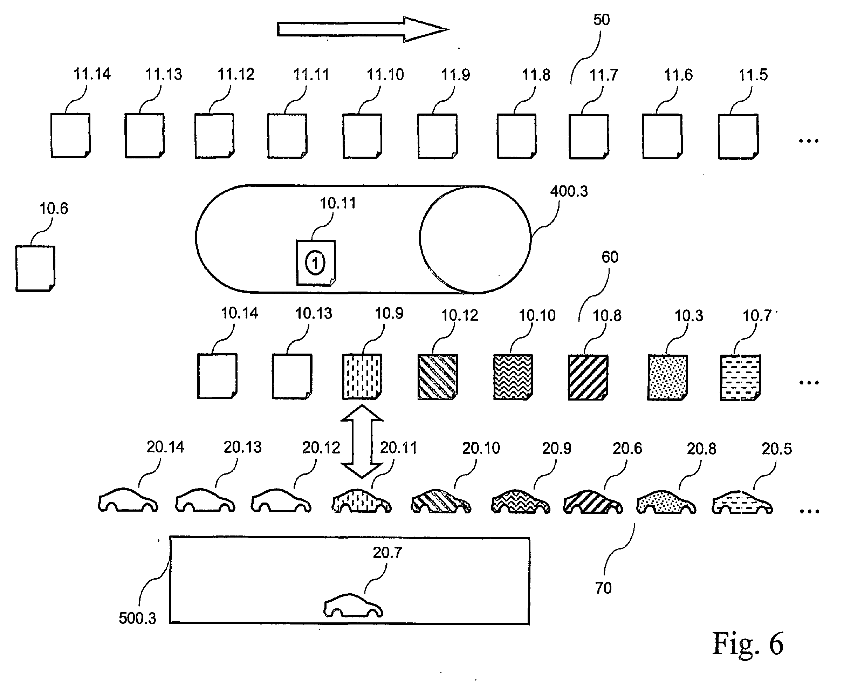

Fig. 6 zeigt als Momentaufnahme die Fertigungsobjekte und Aufträge im Ausführungsbeispiel nach dem zehnten Auswahlvorgang. Die vier als erste ausgewählten Aufträge und Fertigungsobjekte sind in Fig. 6 nicht mehr dargestellt, dafür die in den vorigen Figuren nicht dargestellten restlichen Fertigungsobjekte und Aufträge.

Die Auswahl je eines Fertigungsobjekts und eines Auftrags wird fortgesetzt, bis die gesamte Auftrags-Abfolge abgearbeitet ist.

Die folgende Tabelle veranschaulicht die Abfolge der Auswahlvorgänge. Eingetragen sind die Figuren, die die jeweils erreichte Situation zeigen. Hierbei bedeuten:
- Zeitpkt.: Nummer i des Auswahlzeitpunkts T_i
- 1. Auftrag: erster Auftrag in der Kopie 60 der Auftrags-Abfolge 50 vor Durchführung des Auswahlvorgangs Nr. i,
- 1. FO: erstes Fertigungsobjekt in der Fertigungsobjekt-Abfolge 70 vor Durchführung des Auswahlvorgangs Nr. i,
- Inhalt Zwischenspeicher: Inhalt des elektronischen Zwischenspeichers 400.3 nach Durchführung des Auswahlvorgangs Nr. i, wobei die jeweilige Verweildauer in eckigen Klammern angegeben ist,
- Inhalt Sortierpuffer: Inhalt des Sortierpuffers 500.3 nach Durchführung des Auswahlvorgangs Nr. i,
- ausgew. Auftrag: der im Auswahlvorgang Nr. i aus der Kopie ausgewählter Auftrag,
- ausgew. FO: das im Auswahlvorgang Nr. i aus der Fertigungsobjekt-Abfolge 70 ausgewähltes Fertigungsobjekt,
- Rel-Pos: Relativ-Position des ausgewählten Auftrags.

| Zeit pkt. | 1. Auftrag | 1. FO | Inhalt Zwischenspeicher | Inhalt Sortierpuffer | ausgew. Auftrag | ausgew. FO | Rel-Pos |
|---|---|---|---|---|---|---|---|
| 0 | 10.1 | 20.1 | ./. | ./. | 10.1 | 20.1 | 0 |
| Fig. 2 | | | | | | | |
| 1 | 10.2 | 20.2 | 10.2 [0], 10.3 [0] | ./. | 10.4 | 20.2 | +2 |
| Fig. 3 | | | | | | | |
| 2 | 10.5 | 20.3 | 10.2 [1], 10.3 [1] | ./. | 10.5 | 20.3 | +2 |
| 3 | 10.6 | 20.4 | 10.3 [2] | ./. | 10.2 | 20.4 | -2 |
| 4 | 10.6 | 20.5 | 10.3 [3], 10.6 [0] | ./. | 10.7 | 20.5 | +2 |
| Fig. 4 | | | | | | | |
| 5 | 10.8 | 20.6 | 10.6 [1] | 20.6, 20.7 | 10.3 | 20.8 | -3 |
| 6 | 10.8 | 20.9 | 10.6 [2] | 20.7 | 10.8 | 20.6 | +1 |
| 7 | 10.9 | 20.9 | 10.6 [2], 10.9 [0] | 20.7 | 10.10 | 20.9 | +2 |
| Fig. 5 | | | | | | | |
| 8 | 10.11 | 20.10 | 10.6 [3], 10.9 [1], 10.11 [0] | 20.7 | 10.12 | 20.10 | +3 |
| 9 | 10.13 | 20.11 | 10.11 [1] | 20.7 | 10.9 | 20.11 | -1 |
| Fig. 6 | | | | | | | |

Die Auswahlvorgänge werden in der bevorzugten Ausführungsform von einem industrietauglichen Produktionsleitrechner ausgeführt. Dieser Produktionsleitrechner ist redundant ausgelegt und besitzt daher eine hohe Verfügbarkeit. Die Aufträge sind als Datensätze in einer Datenbank abgespeichert, auf die der Produktionsleitrechner Lese- und Schreibzugriff hat. Ein Datensatz für einen Auftrag wird angelegt, sobald der Auftrag eingegangen ist. Der Datensatz verbleibt solange in der Datenbank, bis ein Kraftfahrzeug gemäß des Auftrags fertiggestellt und eine Rechnung ausgestellt und bezahlt wurde. In der Datenbank sind weiterhin Datensätze für Fertigungsobjekte abgespeichert.

Möglich ist es, jeden elektronischen Zwischenspeicher als eigene Datenbank zu realisieren und Datensätze real zu kopieren. Rechenzeit und Speicherkapazität werden eingespart, wenn keine Datensätze kopiert werden, sondern das Verfahren dadurch realisiert wird, daß zusätzliche Datenfelder angelegt und verändert werden. Dies wird im folgenden beschrieben. Jeder Datensatz für einen Auftrag umfaßt folgende Datenfelder:
- Datenfelder für die oben beschriebenen Festlegungen des Kraftfahrzeugs, das aufgrund des Auftrags zu fertigen ist, z. B. Farbe der Lackierung und gewünschte Sonderausstattungen,
- Soll-Position, das ist die Position des Auftrags in der Auftrags-Reihenfolge 50,
- eine Kennung desjenigen Fertigungsobjekts, das aktuell aufgrund des Auftrags bearbeitet wird,
- eine Kennung desjenigen Teilprozesses, in dem ein Fertigungsobjekt gemäß dem Auftrag aktuell bearbeitet wird
- Ist-Position, das ist die Position des Auftrags in der Kopie 60 der Auftrags-Reihenfolge,
- eine Kennung desjenigen elektronischen Zwischenspeichers, in dem sich der Auftrag aktuell befindet,
- für jeden Teilprozeß die beiden Soll-Zeitpunkte, an dem gemäß der Fahrzeug-Einplanung die Bearbeitung eines Fertigungsobjekts gemäß des Auftrags begonnen bzw. beendet werden soll,
- für jeden Teilprozeß die beiden Ist-Zeitpunkte, an dem die Bearbeitung eines Fertigungsobjekts gemäß des Auftrags tatsächlich begonnen bzw. beendet wurde.

Ein Datensatz für ein Fertigungsobjekt umfaßt folgende Datenfelder:
- eine Kennung desjenigen Teilprozesses, in dem das Fertigungsobjekt aktuell bearbeitet wird,
- eine Kennung des Auftrags, aufgrund dessen das Fertigungsobjekt aktuell bearbeitet wird,
- Position des Fertigungsobjekts in der Fertigungsobjekt-Abfolge 70,
- eine Kennung des Sortierpuffers, in dem sich das Fertigungsobjekt aktuell befindet

Wenn ein Auftrag vor einem Teilprozeß "wartet", also ein Fertigungsobjekt aufgrund des Auftrags in einem vorhergehenden Teilprozeß bearbeitet wurde und das Fertigungsobjekt den vorhergehenden Teilprozeß verlassen hat, aber noch nicht für den nächsten Teilprozeß ausgewählt wurde, wird derjenige Teilprozeß notiert, vor dem der Auftrag wartet. Das Datenfeld für einen elektronischen Zwischenspeicher ist natürlich nur dann gefüllt, wenn ein Auftrag der Kopie in den elektronischen Zwischenspeicher eingestellt wurde. Nach der Entnahme des Auftrags aus dem elektronischen Zwischenspeicher wird das Datenfeld für den Zwischenspeicher geleert.

Im Beispiel der Fig. 4 ist die Soll-Position des Auftrags 10.1 die 1, die des Auftrags 10.2 die 2 und so fort. Die Ist-Position des Auftrags 10.1 ist die 1, die des Auftrag 10.2 die 4, die des Auftrag 10.4 die 2 und so fort. Der Auftrag 10.3 besitzt nach dem vierten Auswahlvorgang keine Soll-Position. Im entsprechenden Datenfeld ist eine Kennung des Zwischenspeichers 400.3 notiert.

Bei der Durchführung eines Auswahlvorgangs durchsucht der Produktionsleitrechner die Datensätze für Aufträge und sucht jeweils nach einem Fertigungsobjekt und einem Auftrag, die zueinander passen. Sind diese gefunden, wird im Datensatz für den ausgewählten Auftrag eine Kennung des ausgewählten Fertigungsobjekts notiert. Umgekehrt wird im Datensatz für das ausgewählte Fertigungsobjekt eine Kennung des ausgewählten Auftrags notiert. Die Datenfelder "Ist-Position" des Auftrags-Datensatzes und "Position" des Fertigungsobjekts werden mit den aktuellen Werten gefüllt. Die Kopie der Auftrags-Abfolge wird dadurch gebildet, daß die Datenfelder "Ist-Position" der Auftrags-Datensätze gefüllt und verändert werden. Sobald ein Auftrag den "Taufpunkt" 300 erreicht hat, sind die Werte in "Ist-Position" und "Soll-Position" identisch, so daß nur noch der Wert von "Soll-Position" benötigt wird.

Vorzugsweise werden die Datenfelder "Ist-Position", "Ist-Zeitpunkte", "elektronischer Zwischenspeicher" und "Fertigungsobjekt der Auftrags-Datensätze sowie "Position" und "Auftrag" der Fertigungsobjekt-Datensätze regelmäßig geleert und mit den aktuellen Werten beschrieben. Diese aktuellen Werte werden zuvor ermittelt. Dadurch wird regelmäßig ein definierter Aufsetzpunkt geschaffen. Beispielsweise wird jede Nacht eine vorbeugende Instandhaltung des gesamten Fertigungsprozesses durchgeführt. Während dieser Instandhaltung werden die gerade genannten Datenfelder geleert und mit den ermittelten aktuellen Werten gefüllt.

### Bezugszeichenliste

| *Zeichen* | *Bedeutung* |
|---|---|
| 10.1, 10.2, 10.3, ... | Aufträge der Kopie der Auftrags-Abfolge 60 |
| 11.1, 11.2, 11.3, ... | Aufträge der Original-Auftrags-Abfolge 50 |
| 20.1, 20.2, 20.3, ... | Fertigungsobjekt-Abfolge nach dem Teilprozeß 100.2 |
| 50 | Original-Auftrags-Abfolge |
| 60 | Kopie der Auftrags-Abfolge |
| 70 | Fertigungsobjekt-Abfolge |
| 100.1, 100.2, ... | Gewerke des Fertigungsprozesses als Teilprozesse |
| 100.1 | Gewerk Vorlauf-Logistik |
| 100.2 | Gewerk Rohbau |
| 100.3 | Gewerk Oberfläche |
| 100.4 | Gewerk Produktions-Logistik |
| 100.5 | Gewerk Inneneinbau |
| 100.6 | Gewerk Fahrwerk |
| 100.7 | Gewerk Einfahren |
| 100.8 | Gewerk Wagen-Fertigstellung |
| 110.1, 110.2 | Arbeitsschritte von Teilprozessen |
| 200.2 | Auswahlpunkt vor dem Gewerk Rohbau |
| 200.3 | Auswahlpunkt vor dem Gewerk Oberfläche |
| 300 | Taufpunkt, Auswahlpunkt vor dem Gewerk Inneneinbau |
| 400.2 | elektronischer Zwischenspeicher für den Teilprozeß 100.2 |
| 400.3 | elektronischer Zwischenspeicher für den Teilprozeß 100.3 |
| 400.5 | elektronischer Zwischenspeicher für den Teilprozeß 100.5 |
| 500.3 | Sortierpuffer für Fertigungsobjekte zwischen den Teilprozessen 100.2 und 100.3 |
| 500.5 | Sortierpuffer für Fertigungsobjekte zwischen den Teilprozessen 100.3 und 100.5 |

## Patentansprüche

1. Verfahren zur automatischen Steuerung eines Fertigungsprozesses zur Serienfertigung auftragsspezifischer Produkte, wobei
- der Fertigungsprozeß einen Teilprozeß (100.1,...,100.8) umfaßt,
- eine Abfolge (50) von in elektronischer Form vorliegenden Aufträgen (10.1,10.2,...) für Produkte, die im Fertigungsprozeß gefertigt werden, und eine Abfolge (70) von Fertigungsobjekten (20.1,20.2,...), aus denen die Produkte entstehen, den Fertigungsprozeß durchlaufen,
- ein Auswahlvorgang durchgeführt wird, bei dem ein Auftrag der Auftrags-Abfolge und ein Fertigungsobjekt der Fertigungsobjekt-Abfolge, die zueinander passen, ausgewählt werden,
- das ausgewählte Fertigungsobjekt gemäß dem ausgewählten Auftrag im Teilprozeß (100.2,100.3) bearbeitet wird
- und Auswahlvorgang und Bearbeitung wiederholt werden, bis jeder Auftrag der Auftrags-Abfolge (50) den Teilprozeß durchlaufen hat,
**dadurch gekennzeichnet, daß**
eine Kopie (60) der Auttrags-Abfolge (50) erzeugt wird, ein zunächst leerer elektronischer Zwischenspeicher (400.2,400.3) für Aufträge erzeugt wird,
bei einem Auswahlvorgang dann, wenn das erste Fertigungsobjekt der Fertigungsobjekt-Abfolge (70) und der erste Auftrag (11.1,11.2,...) der Kopie (60) nicht zueinander passen, der erste Auftrag aus der Kopie (60) entfernt und in den Zwischenspeicher (400.2,400.3) eingestellt wird,
und bei einem Auswahlvorgang dann, wenn die Verweildauer mindestens eines Auftrags im Zwischenspeicher (400.2,400.3) bis zu diesem Auswahlvorgang größer oder gleich einer vorgegebenen Verweildauer-Schranke ist,
- der Auftrag mit der größten Verweildauer im Zwischenspeicher (400.2,400.3) und ein zu ihm passendes Fertigungsobjekt (20.1,20.2,...) aus der Fertigungsobjekt-Abfolge (70) ausgewählt werden,
- der ausgewählte Auftrag aus dem Zwischenspeicher (400.2,400.3) entfernt
- und das ausgewählte Fertigungsobjekt auf den ersten Platz der Fertigungsobjekt-Abfolge (70) vorgezogen wird.

2. Verfahren nach Anspruch 1,
**dadurch gekennzeichnet, daß**
- ein minimaler Zeitabstand zwischen zwei Auswahlvorgängen
- und eine Anzahl-Schranke für die maximale Anzahl von Aufträgen im Zwischenspeicher (400.2,400.3)
vorgegeben sind
und als Verweildauer-Schranke ein Wert vorgegeben wird, der kleiner oder gleich dem Produkt aus minimalem Zeitabstand und Anzahl-Schranke ist.

3. Verfahren nach Anspruch 1 oder Anspruch 2,
**dadurch gekennzeichnet, daß**
- eine für alle Fertigungsobjekte der Fertigungsobjekt-Abfolge (70) zu garantierende maximale Durchlaufzeit durch den Teilprozeß,
- eine für alle Fertigungsobjekte der Fertigungsobjekt-Abfolge (70) gültige maximale Bearbeitungszeit als Zeitabstand zwischen Auswahl des Fertigungsobjekts und Austritt des Fertigungsobjekts aus dem Teilprozeß
- und ein maximaler Zeitabstand zwischen zwei aufeinanderfolgenden Auswahlvorgängen
vorgegeben sind
und die Verweildauer-Schranke so vorgegeben wird, daß die Summe aus
- der Verweildauer-Schranke,
- dem vorgegebenen maximalen Zeitabstand
- und der vorgegebenen maximalen Bearbeitungszeit kleiner oder gleich der vorgegebenen maximalen Durchlaufzeit ist.

4. Verfahren nach einem der Ansprüche 1 bis 3,
**dadurch gekennzeichnet,**
**daß** dann, wenn die Verweildauer eines Auftrags im Zwischenspeicher (400.2,400.3) die Verweildauer-Schranke erreicht oder überschritten hat,
für jeden Auftrag im Zwischenspeicher (400.2,400.3) probeweise
- ein passendes Fertigungsobjekt ermittelt wird,
- ein Arbeitsauftrag an den Teilprozeß zur Bearbeitung des passenden Fertigungsobjekts für den Auftrag erzeugt wird,
- die Dauer der Durchführung dieses Arbeitsauftrages ermittelt wird
und derjenige Auftrag im Zwischenspeicher (400.2,400.3) ausgewählt wird, für den die Summe aus Verweildauer im Zwischenspeicher und probeweise ermittelter Durchführungsdauer den größten Wert annimmt.

5. Verfahren nach einem der Ansprüche 1 bis 4,
**dadurch gekennzeichnet,**
**daß** dann, wenn kein Fertigungsobjekt in der Fertigungsobjekt-Abfolge (70) zum Auftrag mit der größten Verweildauer paßt und diese größte Verweildauer größer als die Verweildauer-Schranke ist,
dieser Auftrag aus dem Zwischenspeicher (400.2,400.3) entfernt und markiert wird.

6. Verfahren nach einem der Ansprüche 1 bis 5,
**dadurch gekennzeichnet,**
**daß** dann, wenn
der Zwischenspeicher (400.2,400.3) mindestens einen Auftrag enthält, der zum ersten Fertigungsobjekt der Fertigungs-Abfolge (70) paßt,
und kein Auftrag im Zwischenspeicher eine Verweildauer größer als die Verweildauer-Schranke besitzt, das erste Fertigungsobjekt und der passende Auftrag ausgewählt werden.

7. Verfahren nach einem der Ansprüche 1 bis 6,
**dadurch gekennzeichnet, daß**
- eine natürliche Zahl N als Losgröße für die Bearbeitung von Fertigungsobjekten im Teilprozeß vorgegeben ist,
- aus der Kopie (60) der Auftrags-Abfolge (50) und/oder dem Zwischenspeicher (400.2,400.3) N Aufträge, die als ein Los im Teilprozeß bearbeitet werden können, ausgewählt werden, und
- N Fertigungsobjekte der Fertigungsobjekt-Abfolge (70), die zu den N Aufträgen passen, ausgewählt, auf die ersten N Plätze der Fertigungsobjekt-Abfolge (70) vorgezogen und gemäß der N Aufträge im Teilprozeß bearbeitet werden.

8. Verfahren nach Anspruch 7,
**dadurch gekennzeichnet, daß**
mehrmals probeweise eine Menge von N Aufträgen und dazu passenden N Fertigungsobjekten ausgewählt werden,
jede der ausgewählten Mengen mit einer Bewertungsfunktion bewertet wird, die auf mindestens einem der folgenden Einzel-Kriterien beruht:
- Anzahl der Fertigungsobjekte der Fertigungsobjekt-Abfolge (70), die sich vor einem Fertigungsobjekt der probeweise ausgewählten Menge befinden und selber nicht zur Menge gehören,
- Anzahl der Aufträge der Kopie (60) der Auftrags-Abfolge (50), die sich vor einem Auftrag der probeweise ausgewählten Menge befinden und selber nicht zur Menge gehören,
- Maximale Verweildauer derjenigen der N probeweise ausgewählten Aufträge im Zwischenspeicher (400.2,400.3),
- Kosten für die Bearbeitung der N Fertigungsobjekte im Teilprozeß gemäß der N Aufträge,
- Zeitbedarf für die Bearbeitung der N Fertigungsobjekte im Teilprozeß gemäß der N Aufträge,
und die am besten bewertete Menge tatsächlich ausgewählt wird.

9. Verfahren nach Anspruch 7 oder Anspruch 8,
**dadurch gekennzeichnet,**
**daß** die ersten N Fertigungsobjekte der Fertigungsobjekt-Abfolge (70) und N zu ihnen passende Aufträge ausgewählt werden.

10. Verfahren nach einem der Ansprüche 1 bis 9,
**dadurch gekennzeichnet, daß**
- der ausgewählte Auftrag an erster Stelle in die Kopie (60) eingefügt wird
- und der maximale Vorgriff und/oder der maximale Nachgriff der Fertigungsobjekte der Fertigungsobjekt-Abfolge (70) ermittelt werden,
wobei die Auftrags-Abfolge (50) mit der Kopie (60) der Auftrags-Abfolge (50) verglichen wird.

11. Verfahren nach einem der Ansprüche 1 bis 10,
**dadurch gekennzeichnet, daß** der Quotient aus
- Anzahl derjenigen Aufträge (10.1,10.2,...) in der Kopie (60) der Auftrags-Abfolge (50), die in den Zwischenspeicher (400.2,400.3) eingestellt werden
- und Anzahl der Aufträge (11.1,11.2,...) in der Auftrags-Abfolge (50) vor dem ersten Auswahlvorgang
ermittelt wird.

12. Verfahren nach einem der Ansprüche 1 bis 11,
**dadurch gekennzeichnet, daß**
- die Fertigungsobjekte nach dem Teilprozeß einen weiteren Teilprozeß (100.5) durchlaufen,
- der ausgewählte Auftrag an erster Stelle in die Kopie (60) eingefügt wird,
- ein weiterer zunächst leerer elektronischer Zwischenspeicher (400.5) für Aufträge erzeugt wird,
- ein weiterer Auswahlvorgang für den weiteren Teilprozeß (100.5) durchgeführt wird, bei dem ein Auftrag der Kopie (60) und ein Fertigungsobjekt der Fertigungsobjekt-Abfolge (70), die zueinander passen, ausgewählt werden,
- bei einem weiteren Auswahlvorgang dann, wenn das erste Fertigungsobjekt der Fertigungsobjekt-Abfolge (70) und der erste Auftrag der Kopie (60) nicht zueinander passen, der erste Auftrag aus der Kopie (60) entfernt und in den weiteren Zwischenspeicher eingestellt wird,
- bei einem weiteren Auswahlvorgang dann, wenn die Verweildauer mindestens eines Auftrags im weiteren Zwischenspeicher (400.5) bis zu diesem Auswahlvorgang größer oder gleich einer vorgegebenen weiteren Verweildauer-Schranke ist,
- der Auftrag mit der größten Verweildauer im weiteren Zwischenspeicher (400.5) und ein zu ihm passendes Fertigungsobjekt aus der Fertigungsobjekt-Abfolge (70) ausgewählt werden,
- der ausgewählte Auftrag aus dem weiteren Zwischenspeicher (400.5) entfernt
- und das ausgewählte Fertigungsobjekt auf den ersten Platz der Fertigungsobjekt-Abfolge (70) vorgezogen wird.
- das ausgewählte Fertigungsobjekt gemäß dem ausgewählten Auftrag im weiteren Teilprozeß (100.5) bearbeitet wird
- und weiterer Auswahlvorgang und Bearbeitung wiederholt werden, bis jeder Auftrag der Auftrags-Abfolge (50) den weiteren Teilprozeß (100.5) durchlaufen hat.

13. Verfahren nach einem der Ansprüche 1 bis 12,
**dadurch gekennzeichnet, daß**
- der Fertigungsprozeß einen weiteren Teilprozeß (100.5), den die Fertigungsobjekte nach dem Teilprozeß durchlaufen umfaßt,
- ein weiterer Auswahlvorgang für den weiteren Teilprozeß (100.5) durchgeführt wird, bei dem ein Auftrag der Auftrags-Abfolge (50) und ein Fertigungsobjekt der Fertigungsobjekt-Abfolge (70), die zueinander passen, ausgewählt werden,
- das ausgewählte Fertigungsobjekt gemäß dem ausgewählten Auftrag im weiteren Teilprozeß (100.5) bearbeitet wird
- und weiterer Auswahlvorgang und Bearbeitung wiederholt werden, bis jeder Auftrag der Auftrags-Abfolge (50) den weiteren Teilprozeß durchlaufen hat.

14. Verfahren nach einem der Ansprüche 1 bis 13,
**dadurch gekennzeichnet, daß**
- die Reihenfolge der Aufträge in der Auftrags-Abfolge (50) mit der Reihenfolge, in der die Aufträge ausgewählt werden, verglichen wird,
wobei für jeden Auftrag dessen Relativ-Position in der Auswahl-Reihenfolge im Vergleich zur Position in der Auftrags-Abfolge (50) ermittelt wird
- und aus den Relativ-Positionen aller Aufträge eine Reihenfolge-Güte des Fertigungsprozesses berechnet wird.

15. Verfahren nach Anspruch 14,
**dadurch gekennzeichnet, daß** bei der Berechnung der Reihenfolge-Güte
- der größte Wert aller Relativ-Positionen,
- der kleinste Wert aller Relativ-Positionen
- und/oder der Mittelwert aller Relativ-Positionen
bestimmt wird.

16. Verfahren nach einem der Ansprüche 1 bis 15,
**dadurch gekennzeichnet, daß**
- jeder Auftrag Merkmale des auftragspezifisch zu fertigenden Produkts umfaßt,
- jedes Fertigungsobjekt Merkmale umfaßt, die in einem vorigen Teilprozeß (100.1) des Fertigungsprozesses hergestellt wurden,
- und bei der Prüfung, ob ein Fertigungsobjekt und ein Auftrag zueinander passen, die Fertigungsobjekt-Merkmale mit einer Teilmenge der Produkt-Merkmale verglichen werden.

17. Verfahren nach Anspruch 16,
**dadurch gekennzeichnet, daß**
- ein Fertigungsobjekt und ein Auftrag dann als zueinander passend gewertet werden,
- wenn jedes Produkt-Merkmal des Auftrags, das der Teilmenge angehört, vereinbar mit allen Merkmalen des Fertigungsobjekts ist.

18. Verfahren nach einer der Ansprüche 1 bis 17,
**dadurch gekennzeichnet,**
**daß** für jeden Auftrag der Auftrags-Abfolge (50) ein Datensatz in einer elektronischen Datenbank angelegt wird, der
- ein erstes Datenfeld für die Position des Auftrags in der Auftrags-Abfolge (50) und
- ein zweites Datenfeld für die Position des Auftrags in der Kopie (60)
umfaßt,
die Kopie gebildet wird, indem das zweite Datenfeld jedes Datensatzes mit dem jeweiligen Wert des ersten Datensatzes gefüllt wird
und bei Auswahl des Auftrags die Position des Auftrags in der Kopie (60) im zweiten Datenfeld eingetragen wird.

19. Verfahren nach Anspruch 18,
**dadurch gekennzeichnet,**
**daß** jeder Datensatz ein zunächst leeres drittes Datenfeld für den elektronischen Zwischenspeicher umfaßt,
ein Auftrag **dadurch** in den Zwischenspeicher eingestellt wird, daß das dritte Datenfeld des Datensatzes für den Auftrag mit einer Kennung des Zwischenspeichers gefüllt wird,
und ein Auftrag **dadurch** aus dem Zwischenspeicher entfernt wird, daß das dritte Datenfeld geleert wird.

20. Verfahren nach einem der Ansprüche 1 bis 19,
**dadurch gekennzeichnet, daß**
- der Fertigungsprozeß einen Sortierpuffer (500.3,500.5) umfaßt
- und beim Vorziehen des ausgewählten Fertigungsobjekts auf den ersten Platz der Fertigungsobjekt-Abfolge (70) alle Fertigungsobjekte der Fertigungsobjekt-Abfolge (70) vor dem ausgewählten Fertigungsobjekt in den Sortierpuffer (500.3,500.5) eingestellt werden.

21. Verfahren nach Anspruch 20,
**dadurch gekennzeichnet, daß**
- der Sortierpuffer (500.3,500.5) eine festgelegte Höchstanzahl verfügbarer Plätze für Fertigungsobjekte umfaßt
- und dann, wenn nicht für jedes Fertigungsobjekt, das in der Fertigungsobjekt-Abfolge (70) vor dem ausgewählten Fertigungsobjekt angeordnet ist, freie Plätze im Sortierpuffer (500.3,500.5) verfügbar sind,
- die Auswahl des Auftrags und des Fertigungsobjekts rückgängig gemacht wird
- und der Auftrag aus dem Zwischenspeicher (400.3,400.5) entfernt und markiert wird.

22. Vorrichtung zur automatischen Steuerung eines Fertigungsprozesses zur Serienfertigung auftragsspezifischer Produkte, wobei
der Fertigungsprozeß einen Teilprozeß (100.1,...,100.8) umfaßt und so ausgestaltet ist, daß
- eine Abfolge (50) von in elektronischer Form vorliegenden Aufträgen (10.1,10.2,...) für Produkte, die im Fertigungsprozeß gefertigt werden, und eine Abfolge (70) von Fertigungsobjekten (20.1,20.2,...), aus denen die Produkte entstehen, den Fertigungsprozeß durchlaufen,
- ein Auswahlvorgang durchgeführt wird, bei dem ein Auftrag der Auftrags-Abfolge und ein Fertigungsobjekt der Fertigungsobjekt-Abfolge, die zueinander passen, ausgewählt werden,
- das ausgewählte Fertigungsobjekt gemäß dem ausgewählten Auftrag im Teilprozeß (100.2,100.3) bearbeitet wird
- und Auswahlvorgang und Bearbeitung wiederholt werden, bis jeder Auftrag der Auftrags-Abfolge (50) den Teilprozeß durchlaufen hat, und
die Steuerungs-Vorrichtung eine Einrichtung zum Auswählen eines Auftrags der Auftrags-Abfolge (50) und eines Fertigungsobjekts der Fertigungsobjekt-Abfolge (70), die zueinander passen, umfaßt,
**dadurch gekennzeichnet, daß**
die Steuerungs-Vorrichtung
- einen elektronischen Zwischenspeicher (400.2,400.3,400.5) für Aufträge,
- eine Einrichtung zum Erzeugen einer Kopie (60) der Auftrags-Abfolge (50)
- und eine Einrichtung zur Auswahl des Kundenauftrags mit der größten Verweildauer im elektronischen Zwischenspeicher (400.2,400.3,400.5)
umfaßt und zur Durchführung der folgenden Schritte ausgestaltet ist:
Erzeugen.einer Kopie (60) der Auftrags-Abfolge (50),
Erzeugen eines zunächst leeren elektronischen Zwischenspeichers (400.2,400.3) für Aufträge,
bei einem Auswahlvorgang dann, wenn das erste Fertigungsobjekt der Fertigungsobjekt-Abfolge (70) und der erste Auftrag (11.1,11.2,...) der Kopie (60) nicht zueinander passen, Entfernen des ersten Auftrags aus der Kopie (60) Einstellen in den Zwischenspeicher (400.2,400.3),
und bei einem Auswahlvorgang dann, wenn die Verweildauer mindestens eines Auftrags im Zwischenspeicher (400.2,400.3) bis zu diesem Auswahlvorgang größer oder gleich einer vorgegebenen Verweildauer-Schranke ist,
- Auswählen des Auftrags mit der größten Verweildauer im Zwischenspeicher (400.2,400.3) und eines zu ihm passenden Fertigungsobjekts (20.1,20.2,...) aus der Fertigungsobjekt-Abfolge (70),
- Entfernen des ausgewählten Auftrags aus dem Zwischenspeicher (400.2,400.3)
- und Vorziehen des ausgewählten Fertigungsobjekts auf den ersten Platz der Fertigungsobjekt-Abfolge (70).

23. Computerprogramm-Produkt, das direkt in den internen Speicher eines Computers geladen werden kann und Softwareabschnitte umfaßt, mit denen ein Verfahren nach einem der Ansprüche 1 bis 21 ausgeführt werden kann, wenn das Produkt auf einem Computer läuft.

24. Computerprogramm-Produkt, das auf einem von einem Computer lesbaren Medium gespeichert ist und das von einem Computer lesbare Programm-Mittel aufweist, die den Computer veranlassen, ein Verfahren nach einem der Ansprüche 1 bis 21 auszuführen.

## Claims

1. Method for automatically controlling a production process for the series production of order-specific products,
- the production process comprising a partial process (100.1,..., 100.8),
- a sequence (50) of orders (10.1, 10.2,...) in electronic form for products which are produced in the production process, and a sequence (50) of production objects (20.1, 20.2,...) from which the products are created run through the production process,
- a selection process is carried out in which an order of the order sequence and a production object of the production object sequence that match one another are selected,
- the selected production object is processed according to the selected order in the partial process (100.2, 100.3)
- and the selection process and processing are repeated until each order of the order sequence (50) has run through the partial process,
**characterized in that**
a copy (60) of the order sequence (50) is generated,
an initially empty electronic buffer memory (400.2, 400.3) for orders is created,
in a selection process, whenever the first production object of the production object sequence (70) and the first order (11.1, 11.2,...) of the copy (60) do not match one another, the first order is removed from the copy (60) and stored in the buffer memory (400.2, 400.3),
and, in a selection process, whenever the waiting time of at least one order in the buffer memory (400.2, 400.3) up to this selection process is greater than or equal to a prescribed waiting time limit,
- the order with the greatest waiting time in the buffer memory (400.2, 400.3) and a production object (20.1, 20.2,...) matching it from the production object sequence (70) are selected,
- the selected order is removed from the buffer memory (400.2, 400.3)
- and the selected production object is brought forward to the first place of the production object sequence (70).

2. Method according to Claim 1, **characterized in that**
- a minimal time interval between two selection processes
- and a numerical limit for the maximum number of orders in the buffer memory (400.2, 400.3)
are prescribed
and a value which is less than or equal to the product of the minimal time interval and the numerical limit is prescribed as the waiting time limit.

3. Method according to Claim 1 or Claim 2, **characterized in that**
- a maximum run-through time through the partial process, to be guaranteed for all production objects of the production object sequence (70),
- a maximum processing time, applicable to all production objects of the production object sequence (70), as a time interval between when the production object is selected and when the production object leaves the partial process,
- and a maximum time interval between two successive selection processes
are prescribed
and the waiting time limit is prescribed such that the sum of
- the waiting time limit,
- the prescribed maximum time interval
- and the prescribed maximum processing time
is less than or equal to the prescribed maximum run-through time.

4. Method according to one of Claims 1 to 3, **characterized in that**, whenever the waiting time of an order in the buffer memory (400.2, 400.3) has reached or exceeded the waiting time limit,
for each order in the buffer memory (400.2, 400.3), on a trial basis,
- a matching production object is determined,
- a work order for the partial process is generated for the processing of the matching production object for the order,
- how long the implementation of this work order will last is determined
and that order in the buffer memory (400.2, 400.3) for which the sum of the waiting time in the buffer memory and the implementation time determined on a trial basis takes the greatest value is selected.

5. Method according to one of Claims 1 to 4, **characterized in that**
whenever no production object in the production object sequence (70) matches the order with the greatest waiting time and this greatest waiting time is greater than the waiting time limit,
this order is removed from the buffer memory (400.2, 400.3) and marked.

6. Method according to one of Claims 1 to 5, **characterized in that**, whenever
the buffer memory (400.2, 400.3) contains at least one order that matches the first production object of the production sequence (70),
and no order in the buffer memory has a waiting time greater than the waiting time limit,
the first production object and the matching order are selected.

7. Method according to one of Claims 1 to 6, **characterized in that**
- a natural number N is prescribed as the batch size for the processing of production objects in the partial process,
- N orders that can be processed as a batch in the partial process are selected from the copy (60) of the order sequence (50) and/or the buffer memory (400.2, 400.3), and
- N production objects of the production object sequence (70) that match the N orders are selected, brought forward to the first N places of the production object sequence (70) and processed according to the N orders in the partial process.

8. Method according to Claim 7, **characterized in that**
a set of N orders and N production objects matching them is repeatedly selected on a trial basis,
each of the selected sets is assessed with an assessment function, which is based on at least one of the following individual criteria:
- the number of production objects of the production object sequence (70) that are before a production object of the set selected on a trial basis and themselves do not belong to the set,
- the number of orders of the copy (60) of the order sequence (50) that are before an order of the set selected on a trial basis and themselves do not belong to the set,
- the maximum waiting time in the buffer memory (400.2, 400.3) of those of the N orders selected on a trial basis,
- the costs for the processing of the N production objects in the partial process according to the N orders,
- the time requirement for the processing of the N production objects in the partial process according to the N orders,
and the set assessed as the best is actually selected.

9. Method according to Claim 7 or Claim 8, **characterized in that** the first N production objects of the production object sequence (70) and N orders matching them are selected.

10. Method according to one of Claims 1 to 9, **characterized in that**
- the selected order is inserted into the copy (60) at the first place
- and the maximum promotion and/or the maximum demotion of the production objects of the production object sequence (70) are determined,
the order sequence (50) being compared with the copy (60) of the order sequence (50).

11. Method according to one of Claims 1 to 10, **characterized in that** the quotient of
- the number of those orders (10.1, 10.2,...) in the copy (60) of the order sequence (50) that are stored in the buffer memory (400.2, 400.3)
- and the number of the orders (11.1, 11.2,...) in the order sequence (50) before the first selection process
is determined.

12. Method according to one of Claims 1 to 11, **characterized in that**
- after the partial process, the production objects run through a further partial process (100.5),
- the selected order is inserted into the copy (60) at the first place,
- a further, initially empty, electronic buffer memory (400.5) for orders is created,
- a further selection process, in which an order of the copy (60) and a production object of the production object sequence (70) that match one another are selected, is carried out for the further partial process (100.5),
- in a further selection process, whenever the first production object of the production object sequence (70) and the first order of the copy (60) do not match one another, the first order is removed from the copy (60) and stored in the further buffer memory,
- in a further selection process, whenever the waiting time of at least one order in the second buffer memory (400.5) up to this selection process is greater than or equal to a prescribed further waiting time limit,
- the order with the greatest waiting time in the further buffer memory (400.5) and a production object matching it from the production object sequence (70) are selected,
- the selected order is removed from the further buffer memory (400.5)
- and the selected production object is brought forward to the first place of the production object sequence (70),
- the selected production object is processed according to the selected order in the further partial process (100.5)
- and the further selection process and processing are repeated until every order of the order sequence (50) has run through the further partial process (100.5).

13. Method according to one of Claims 1 to 12, **characterized in that**
- the production process comprises a further partial process (100.5), which is run through by the production objects after the partial process,
- a further selection process, in which an order of the order sequence (50) and a production object of the production object sequence (70) that match one another are selected, is carried out for the further partial process (100.5),
- the selected production object is processed according to the selected order in the further partial process (100.5)
- and the further selection process and processing are repeated until every order of the order sequence (50) has run through the further partial process.

14. Method according to one of Claims 1 to 13, **characterized in that**
- the sequence of the orders in the order sequence (50) is compared with the sequence in which the orders are selected,
for each order, its relative position in the selection sequence being determined in comparison with the position in the order sequence (50)
- and a sequence quality of the production process is calculated from the relative positions of all the orders.

15. Method according to Claim 14, **characterized in that**, in the calculation of the sequence quality,
- the greatest value of all the relative positions,
- the smallest value of all the relative positions
- and/or the mean value of all the relative positions
is determined.

16. Method according to one of Claims 1 to 15, **characterized in that**
- each order comprises features of the product to be produced order-specifically,
- each production object comprises features which have been manufactured in a previous partial process (100.1) of the production process,
- and, in the check whether a production object and an order match one another, the production object features are compared with a subset of the product features.

17. Method according to Claim 16, **characterized in that**
- a production object and an order are assessed as matching one another
- whenever every product feature of the order that belongs to the selection subset is consistent with all the features of the production object.

18. Method according to one of Claims 1 to 17, **characterized in that**
for each order of the order sequence (50), a data record is created in an electronic database, which record comprises
- a first data field for the position of the order in the order sequence (50) and
- a second data field for the position of the order in the copy (60),
the copy is formed by the second data field of each data record being filled with the respective value of the first data record
and, when the order is selected, the position of the order in the copy (60) is entered in the second data field.

19. Method according to Claim 18, **characterized in that**
each data record comprises an initially empty third data field for the electronic buffer memory,
an order is stored in the buffer memory by the third data field of the data record for the order being filled with an identification of the buffer memory,
and an order being removed from the buffer memory by the third data field being emptied.

20. Method according to one of Claims 1 to 19, **characterized in that**
- the production process comprises a sorting buffer (500.3, 500.5)
- and, when the selected production object is brought forward to the first place of the production object sequence (70), all the production objects of the production object sequence (70) before the selected production object are stored in the sorting buffer (500.3, 500.5).

21. Method according to Claim 20, **characterized in that**
- the sorting buffer (500.3, 500.5) comprises a designated maximum number of available places for production objects
- and, whenever free places are not available in the sorting buffer (500.3, 500.5) for every production object that is arranged in the production object sequence (70) before the selected production object,
- the selection of the order and of the production object is reversed
- and the order is removed from the buffer memory (400.3, 400.5) and marked.

22. Apparatus for automatically controlling a production process for the series production of order-specific products,
- the production process comprising a partial process (100.1,..., 100.8) and being configured such that,
- a sequence (50) of orders (10.1, 10.2,...) in electronic form for products which are produced in the production process, and a sequence (50) of production objects (20.1, 20.2,...) from which the products are created run through the production process,
- a selection process is carried out in which an order of the order sequence and a production object of the production object sequence that match one another are selected,
- the selected production object is processed according to the selected order in the partial process (100.2, 100.3)
- and the selection process and processing are repeated until each order of the order sequence (50) has run through the partial process, and
the control apparatus comprising a device for selecting an order of the order sequence (50) and a production object of the production object sequence (70) that match one another,
**characterized in that**
the control apparatus comprises
- an electronic buffer memory (400.2, 400.3, 400.5) for orders,
- a device for creating a copy (60) of the order sequence (50)
- and a device for selecting the customer order with the greatest waiting time in the electronic buffer memory (400.2, 400.3, 400.5)
and being configured for carrying out the following steps:
generating a copy (60) of the order sequence (50),
creating an initially empty electronic buffer memory (400.2, 400.3) for orders,
in a selection process, whenever the first production object of the production object sequence (70) and the first order (11.1, 11.2,...) of the copy (60) do not match one another, removing the first order from the copy (60) and storing it in the buffer memory (400.2, 400.3),
and, in a selection process, whenever the waiting time of at least one order in the buffer memory (400.2, 400.3) up to this selection process is greater than or equal to a prescribed waiting time limit,
- selecting the order with the greatest waiting time in the buffer memory (400.2, 400.3) and a production object (20.1, 20.2,...) matching it from the production object sequence (70),
- removing the selected order from the buffer memory (400.2, 400.3)
- and bringing forward the selected production object to the first place of the production object sequence (70).

23. Computer program product which is loaded directly into the internal memory of a computer and comprises software sections with which a method according to one of Claims 1 to 21 can be performed when the product runs on a computer.

24. Computer program product which is stored on a computer-readable medium and which has computer-readable programming means which cause the computer to perform a method according to one of Claims 1 to 21.

## Revendications

1. Procédé pour automatiser la commande d'un processus de fabrication destiné à la fabrication en série de produits répondant à des commandes de client, moyennant quoi :
- le processus de fabrication comprend un sous-processus (100.1, ..., 100.8),
- une série (50) de commandes présentes sous une forme électronique (10.1, 10.2, ...) correspondant à des produits, qui sont fabriqués dans le processus de fabrication, et une série (70) d'objets de la fabrication (20.1, 20.2, ...), à partir desquels sont créés les produits, sont déroulées dans le processus de fabrication,
- une opération de sélection est exécutée, lors de laquelle une commande de la série de commandes et un objet à fabriquer de la série des objets de la fabrication, qui correspondent l'un à l'autre, sont sélectionnés,
- l'objet à fabriquer sélectionné est traité dans le sous-processus (100.2, 100.3) conformément à la commande sélectionnée, et enfin
- l'opération de sélection et le traitement sont répétés jusqu'à ce que chacune des commandes de la série de commandes (50) ait été déroulée dans le sous-processus,
**caractérisé en ce que**,
une copie (60) de la série des commandes (50) est créée,
une mémoire électronique intermédiaire vide dans un premier temps (400.2, 400.3) pour les commandes est créée,
considérant une opération de sélection, lorsque le premier objet à fabriquer de la série des objets de la fabrication (70) et la première commande (11.1, 11.2, ...) de la copie (60) ne correspondent pas l'un à l'autre, la première commande est retirée de la copie (60) et placée dans la mémoire intermédiaire (400.2, 400.3), et
considérant une opération de sélection, lorsque la durée de résidence en mémoire d'au moins une commande dans la mémoire intermédiaire (400.2, 400.3) jusqu'à cette opération de sélection est supérieure ou égale à un seuil de durée de résidence en mémoire prédéterminé, alors
- la commande présentant la plus longue durée de résidence en mémoire dans la mémoire intermédiaire (400.2, 400.3) et un objet à fabriquer (20.1, 20.2, ...) lui correspondant sont sélectionnés à partir de la série des objets de la fabrication (70),
- la commande sélectionnée est retirée de la mémoire intermédiaire (400.2, 400.3), et
- l'objet à fabriquer sélectionné est avancé en première position de la série des objets de la fabrication (70).

2. Procédé selon la revendication 1,
**caractérisé en ce que**,
- un intervalle de temps minimal entre les deux opérations de sélection, et
- un seuil de quantité défini pour le nombre maximal des commandes présentes dans la mémoire intermédiaire (400.2, 400.3)
sont prédéterminés et
une valeur est prédéterminée en tant que seuil de la durée de résidence en mémoire qui est inférieure ou égale au produit résultant de l'intervalle de temps minimal et du seuil de quantité.

3. Procédé selon la revendication 1 ou la revendication 2,
**caractérisé en ce que**
- un temps maximal à garantir pour tous les objets à fabriquer de la série des objets à fabriquer (70) eu égard à leur déroulement dans le sous-processus,
- un temps de traitement maximal valide pour tous les objets à fabriquer de la série des objets à fabriquer (70) en tant qu'intervalle de temps entre la sélection de l'objet de la fabrication et la sortie dudit objet à fabriquer du sous-processus, et
- un intervalle de temps maximal entre deux opérations de sélection successives
sont prédéterminés, et
le seuil de durée de résidence en mémoire est prédéterminé de telle sorte que la somme résultant :
- du seuil de la durée de résidence en mémoire,
- de l'intervalle de temps maximal prédéterminé, et
- du temps de traitement maximal prédéterminé
est inférieure ou égale à la durée maximale prédéterminée du déroulement dans le processus.

4. Procédé selon l'une quelconque des revendications 1 à 3,
**caractérisé en ce que**,
considérant, lorsque que la durée de résidence en mémoire d'une commande dans la mémoire intermédiaire (400.2, 400.3) atteint ou dépasse le seuil de durée de résidence en mémoire,
pour chaque commande dans la mémoire intermédiaire (400 2, 400.3) à titre d'échantillon,
alors
- un objet à fabriquer correspondant est déterminé,
- une commande de tâche est générée destinée au sous-processus en vue du traitement de l'objet à fabriquer correspondant eu égard à la commande,
- la durée de l'exécution de cette commande de tâche est déterminée,
et
la commande dans la mémoire intermédiaire (400.2, 400.3) qui est sélectionnée, est celle pour laquelle la somme basée sur la durée de résidence en mémoire dans la mémoire intermédiaire et la durée d'exécution déterminée à titre d'échantillon prend la valeur la plus élevée.

5. Procédé selon l'une quelconque des revendications 1 à 4,
**caractérisé en ce que**,
considérant, lorsque aucun objet à fabriquer dans la série des objets de la fabrication (70) ne correspond eu égard à la commande présentant la durée de résidence en mémoire la plus grande et que cette durée de résidence en mémoire est supérieure au seuil de la durée de résidence en mémoire,
alors cette commande est retirée de la mémoire intermédiaire (400.2, 400.3) et est marquée.

6. Procédé selon l'une quelconque des revendications 1 à 5,
**caractérisé en ce que**,
considérant, lorsque la mémoire intermédiaire (400.2, 400.3) contient au moins une commande qui correspond avec le premier objet à fabriquer de la série des objets à fabriquer (70), et
qu'aucune commande dans la mémoire intermédiaire ne possède une durée de résidence en mémoire supérieure au seuil de durée de résidence en mémoire,
alors le premier objet à fabriquer et la commande correspondante sont sélectionnés.

7. Procédé selon l'une quelconque des revendications 1 à 6,
**caractérisé en ce que**,
- un nombre naturel N est prédéterminé en tant que taille de lot pour le traitement des objets de la fabrication dans le sous-processus,
- à partir de la copie (60) de la série de commandes (50) et/ou de la mémoire intermédiaire (400.2, 400.3) N commandes, qui peuvent être traitées en tant que lot dans le sous-processus, sont sélectionnées, et
- N objets à fabriquer de la série des objets de la fabrication (70), qui correspondent avec les N commandes, sont sélectionnés, sont avancés dans les N premières positions de la série des objets de la fabrication (70) et sont traités conformément aux N commandes dans le sous-processus.

8. Procédé selon la revendication 7,
**caractérisé en ce que**,
une quantité de N commandes et une quantité de N objets de la fabrication leur correspondant sont sélectionnées à plusieurs reprises à titre d'échantillon,
chacune des quantités sélectionnées est évaluée à l'aide d'une fonction d'évaluation, qui se fonde sur au moins un des différents critères ci-dessous :
- nombre des objets à fabriquer de la série des objets de la fabrication (70), qui figurent devant un objet à fabriquer de la quantité sélectionnée à titre d'échantillon et ne font pas eux-mêmes partie de la quantité,
- nombre des commandes de la copie (60) de la série de commandes (50), qui figurent devant une commande de la quantité sélectionnée à titre d'échantillon et ne font pas elles-mêmes partie de la quantité,
- durée de résidence en mémoire maximale de celles des N commandes sélectionnées à titre d'échantillon dans la mémoire intermédiaire (400.2, 400.3),
- coût du traitement des N objets à fabriquer dans le sous-processus conformément aux N commandes,
- temps nécessaire au traitement des N objets à fabriquer dans le sous-processus conformément aux N commandes,
et la quantité recevant la meilleure évaluation est effectivement sélectionnée.

9. Procédé selon la revendication 7 ou la revendication 8,
**caractérisé en ce que**,
les N premiers objets à fabriquer de la série des objets de la fabrication (70) et les N commandes leur correspondant sont sélectionnés.

10. Procédé selon l'une quelconque des revendications 1 à 9,
**caractérisé en ce que**,
- la commande sélectionnée en première position est ajoutée dans la copie (60), et
- la zone d'entrée avancée maximale et/ou la zone d'entrée reculée maximale des objets à fabriquer de la série des objets de la fabrication (70) sont déterminées,
moyennant quoi la série de commandes (50) est comparée avec la copie (60) de la série de commandes (50).

11. Procédé selon l'une quelconque des revendications 1 à 10, **caractérisé en ce que**,
le quotient résultant
- du nombre des commandes (10.1, 10.2, ...) figurant dans la copie (60) de la série de commandes (50), qui sont placées dans la mémoire intermédiaire (400.2, 400.3), et
- du nombre des commandes (11.1, 11.2, ...) figurant dans la série de commandes (50) en amont de la première opération de sélection
est déterminé.

12. Procédé selon l'une quelconque des revendications 1 à 11,
**caractérisé en ce que**,
- les objets à fabriquer en aval du sous-processus sont déroulés dans un autre sous-processus (100.5),
- la commande sélectionnée en première position est ajoutée dans la copie (60),
- une autre mémoire intermédiaire électronique vide dans un premier temps (400.5) est créée pour les commandes,
- une autre opération de sélection est exécutée eu égard à l'autre sous-processus (100.5), dans lequel une commande de la copie (60) et un objet à fabriquer de la série des objets de la fabrication (70), qui correspondent l'un à l'autre, sont sélectionnés,
- considérant une autre opération dé sélection, lorsque le premier objet à fabriquer de la série des objets de la fabrication (70) et la première commande de la copie (60) ne correspondent pas l'un à l'autre, la première commande est retirée de la copie (60) et placée dans l'autre mémoire intermédiaire,
- considérant une autre opération de sélection, lorsque la durée de résidence en mémoire d'au moins une commande dans l'autre mémoire intermédiaire (400.5) jusqu'à cette opération de sélection est supérieure ou égale à un autre seuil de durée de résidence en mémoire prédéterminé,
- la commande présentant la plus grande durée de résidence en mémoire dans l'autre mémoire intermédiaire (400.5) et un objet à fabriquer lui correspondant sont sélectionnés à partir de la série des objets de la fabrication (70),
- la commande sélectionnée est retirée de l'autre mémoire intermédiaire (400.5), et
- l'objet de fabrication sélectionné est avancé en première position de la série des objets de la fabrication (70).
- l'objet à fabriquer sélectionné est traité conformément à la commande sélectionnée dans l'autre sous-processus (100.5), et
- l'autre opération de sélection et le traitement sont répétés jusqu'à ce que chaque commande de la série de commandes (50) ait été déroulée dans l'autre sous-processus (100.5).

13. Procédé selon l'une quelconque des revendications 1 à 12,
**caractérisé en ce que**,
- le processus de fabrication comprend un autre sous-processus (100.5), dans lequel sont déroulés les objets à fabriquer en aval du sous-processus,
- une autre opération de sélection est exécutée pour l'autre sous-processus (100.5), dans laquelle une commande de la série de commandes (50) et un objet à fabriquer de la série des objets de la fabrication (70), qui correspondent l'un à l'autre, sont sélectionnés,
- l'objet à fabriquer sélectionné est traité conformément à la commande sélectionnée dans l'autre sous-processus (100.5), et
- l'autre opération de sélection et le traitement sont répétés jusqu'à ce que chacune des commandes de la série de commandes (50) ait été déroulée dans l'autre sous-processus.

14. Procédé selon l'une quelconque des revendications 1 à 13,
**caractérisé en ce que**,
- la séquence des commandes figurant dans la série de commandes (50) est comparée avec la séquence, dans laquelle les commandes sont sélectionnées,
moyennant quoi, pour chaque commande, sa position relative dans la séquence de sélection est déterminée par comparaison avec sa position dans la série de commandes (50), et
- une qualité de la séquence du processus de fabrication est calculée sur la base des positions relatives de toutes les commandes.

15. Procédé selon la revendication 14,
**caractérisé en ce que**,
lors du calcul de la qualité de la séquence:
- la valeur la plus élevée de toutes les positions relatives,
- la valeur la plus faible de toutes les positions relatives,
- et/ou la valeur moyenne de toutes les positions relatives
est calculée.

16. Procédé selon l'une quelconque des revendications 1 à 15,
**caractérisé en ce que**,
- chaque commande comprend des caractéristiques du produit à fabriquer selon la commande de client,
- chaque objet à fabriquer comprend des caractéristiques, qui ont été générées dans un sous-processus précédent (100.1) du processus de fabrication, et
- lors du contrôle pour vérifier si un objet à fabriquer et une commande correspondent l'un à l'autre, les caractéristiques de l'objet à fabriquer sont comparées avec une sous-quantité des caractéristiques du produit.

17. Procédé selon la revendication 16,
**caractérisé en ce que**,
- un objet à fabriquer et une commande sont alors évalués comme correspondant l'un à l'autre,
- lorsque chaque caractéristique de produit de la commande qui appartient à la sous-quantité, est compatible avec toutes les caractéristiques de l'objet à fabriquer.

18. Procédé selon l'une quelconque des revendications 1 à 17,
**caractérisé en ce que**,
pour chacune des commandes de la série de commandes (50), un jeu de données est introduit dans une banque de données électronique,
lequel jeu de données comprend :
- un premier champ de données relatif à la position de la commande dans la série de commandes (50) et
- un deuxième champ de données relatif à la position da la commande dans la copie (60),
la copie est produite **en ce que** le deuxième champ de données de chaque jeu de données est rempli avec la valeur respective du premier jeu de données, et
lors de la sélection de la commande, la position de la commande dans la copie (60) est inscrite dans le deuxième champ de données.

19. Procédé selon la revendication 18,
**caractérisé en ce que**,
chaque jeu de données comprend un troisième champ de données, vide dans un premier temps, pour la mémoire intermédiaire électronique,
une commande est placée dans la mémoire intermédiaire du fait que le troisième champ de données du jeu de données relatif à la commande est rempli avec un identifieur de la mémoire intermédiaire, et
une commande est retirée de la mémoire intermédiaire du fait que le troisième champ de données est vidé.

20. Procédé selon l'une quelconque des revendications 1 à 19,
**caractérisé en ce que**,
- le processus de fabrication comprend un tampon trieur (500.3, 500.5) et
- lorsque l'objet à fabriquer sélectionné est avancé à la première position de la série des objets de la fabrication (70), tous les objets à fabriquer de la série des objets de la fabrication (70) en amont de l'objet à fabriquer sélectionné sont placés dans le tampon trieur (500.3, 500.5).

21. Procédé selon la revendication 20,
**caractérisé en ce que**,
- le tampon trieur (500.3, 500.5) comprend un nombre maximal fixe de positions disponibles pour les objets à fabriquer, et
- considérant, lorsque des positions libres dans le tampon trieur (500 3, 500.5) ne sont pas disponibles pour chacun des objets à fabriquer, qui sont disposés dans la série des objets de la fabrication (70) en amont de l'objet à fabriquer sélectionné,
- la sélection de la commande et de l'objet à fabriquer est rétrogradée, et
- la commande est retirée de la mémoire intermédiaire (400.3, 400.5) et est marquée.

22. Appareil pour automatiser la commande d'un processus de fabrication destiné à la fabrication en série de produits répondant à des commandes de client, moyennant quoi :
- le processus de fabrication comprend un sous-processus (100.1, ..., 100.8) et est conçu de telle sorte que
- une série (50) de commandes figurant sous une forme électronique (10.1, 10.2, ...) relatives aux produits, qui sont fabriqués dans le processus de fabrication, et une série (70) d'objets de la fabrication (20.1, 20.2, ...), à partir desquels sont créés les produits, sont déroulées dans le processus de fabrication,
- une opération de sélection est exécutée, lors de laquelle une commande de la série des commandes et un objet à fabriquer de la série des objets de la fabrication, qui correspondent l'un à l'autre, sont sélectionnés,
- l'objet à fabriquer sélectionné est traité dans le sous-processus (100.2, 100.3) conformément à la commande sélectionnée, et
- l'opération de sélection et le traitement sont répétés jusqu'à ce que chacune des commandes de la série de commandes (50) ait été déroulée dans le sous-processus, et
l'appareil de commande comprend un dispositif destiné à sélectionner une commande de la série de commandes (50) et un objet à fabriquer de la série des objets de la fabrication (70), qui correspondent l'un à l'autre,
**caractérisé en ce que**
l'appareil de commande comprend :
- une mémoire intermédiaire électronique (400.2, 400.3, 400.5) pour les commandes,
- un dispositif pour créer une copie (60) de la série de commandes (50), et
- un dispositif pour sélectionner la commande client présentant la plus grande durée de résidence en mémoire dans la mémoire intermédiaire électronique (400.2, 400.3, 400.5), et
est conçu pour exécuter les étapes qui suivent consistant en :
la création d'une copie (60) de la série de commandes (50),
la création d'une mémoire intermédiaire électronique vide dans un premier temps (400.2, 400.3) pour les commandes,
considérant une opération de sélection, lorsque le premier objet à fabriquer de la série d'objets de la fabrication (70) et la première commande (11.1, 11.2, ...) de la copie (60) ne correspondent pas l'un à l'autre, le retrait de la première commande de la copie (60), le placement dans la mémoire intermédiaire (400.2, 400.3), et
considérant une opération de sélection, lorsque la durée de résidence en mémoire d'au moins une commande dans la mémoire intermédiaire (400.2, 400.3) jusqu'à cette opération de sélection est supérieure ou égale à un seuil de durée de résidence en mémoire prédéterminé,
- la sélection de la commande présentant la durée de résidence en mémoire la plus grande dans la mémoire intermédiaire (400.2, 400.3) et d'un objet à fabriquer lui correspondant (20.1, 20.2, ...) à partir de la série des objets de la fabrication (70),
- le retrait de la commande sélectionnée de la mémoire intermédiaire (400.2, 400.3), et
- l'avancement de l'objet à fabriquer sélectionné à la première position de la série des objets de la fabrication (70).

23. Produit programme d'ordinateur, qui peut être chargé directement dans la mémoire interne d'un ordinateur et comprend des modules logiciels, à l'aide desquels un procédé selon l'une quelconque des revendications 1 à 21 peut être exécuté, lorsque le produit tourne dans un ordinateur.

24. Produit programme d'ordinateur, qui est mémorisé sur un support lisible par un ordinateur et comporte des moyens de programme lisibles par un ordinateur, qui provoquent l'exécution par l'ordinateur d'un procédé selon l'une quelconque des revendications 1 à 21.
